# EUROPÄISCHE PATENTSCHRIFT

(11) **EP 2 976 544 B1**
(45) Veröffentlichungstag und Bekanntmachung des Hinweises auf die Patenterteilung: **14.11.2018**
(21) Anmeldenummer: 14714584.1
(22) Anmeldetag: 11.03.2014
(51) Int. Cl.: F16F 1/393

(54) **ADAPTIVE ELASTISCHE LAGER UND SIE ENTHALTENDE SCHWINGUNGSTILGER**
ADAPTIVE ELASTIC BEARING AND TUNED MASS DAMPER CONTAINING SAME
PALIER ÉLASTIQUE ADAPTATIF ET ABSORBEUR DE VIBRATIONS LE CONTENANT

(30) Priorität: 19.03.2013 EP 13001404; 17.09.2013 EP 13004538
(43) Veröffentlichungstag der Anmeldung: 27.01.2016
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2014/000642
(87) Internationale Veröffentlichungsnummer: WO 2014/146763

(56) Entgegenhaltungen:
- EP-A1- 1 286 076
- WO-A1-2010/054808
- WO-A1-2013/023724
- DE-A1- 4 033 569
- DE-A1-102005 028 565
- US-B1- 7 389 977

## Beschreibung

Die Erfindung betrifft mit elastischen Mittel ausgestatte Lager und sie enthaltende Schwingungstilger mit variabler also adaptiver Steifigkeit, welche dadurch gezielt auf die in der zu dämpfenden Anlage oder Maschine auftretenden unterschiedlichen Erregerfrequenzen eingestellt und angepasst werden können. Die variable Steifigkeit wird dabei durch Einrichten entsprechend platzierter komprimierbarer Freiräume innerhalb des Lagers erreicht, welche gezielt mit Elastomermaterial gefüllt werden können. Die Erfindung betrifft insbesondere solche erfindungsgemäßen adaptiven Schwingungstilger, welche durch unterschiedliche Frequenzen erzeugte Schwingungen zu dämpfen vermögen, in dem die Steifigkeit der elastischen Mittel steuerbar und variable verändert werden kann. Die erfindungsgemäßen Schwingungstilger eignen sich insbesondere für den Einsatz in Windkraftanlagen.

Moderne Windkraftanlagen sind drehzahlvariabel bzw. drehzahlabhängig, so dass es häufig nicht ausreicht, Tilger mit einer festen Eigenfrequenz, welche nur Schwingungen einer bestimmten Frequenz beruhigen können, einzusetzen. Bei drehzahlvariablem Betrieb sind auch die Frequenzen variabel. Störende Schwingungen, die mit den Schwingungstilgern gedämpft werden müssen, entstehen insbesondere in Windkraftanlagen aber auch anderen Anlagen und Maschinen durch die Zahneingriffsfrequenzen von Getrieben und auch durch Rastmomente von Generatoren.

Die im stand der Technik bekannten Schwingungstilger werden für eine bestimmte Frequenz verwendet. Bei Maschinen mit variabler Drehzahl und damit unterschiedliche Erregerfrequenz ist es nötig die Schwingungstilger an die jeweilige Frequenz anzupassen.

WO 2013/023 724 A1 beschreibt einen einstellbaren Schwingungstilger mit den Merkmalen des Oberbegriffs des Anspruchs 1.

Aus der Physik kommt die Erkenntnis, dass die Frequenzverschiebung die Wurzel aus dem Quotienten der Steifigkeit (gemessen als zu verschiebende Kraft (N/mm) und der Masse ist: ω=√(Federkonstante D/Masse m). Soll zum Beispiel die Frequenz verdoppelt werden, wird die vier fache Steifigkeit benötigt. In der Regel sind sogar größere Spreizungen erforderlich.

So wird zum Beispiel zum Erreichen der vier-fachen Frequenz die 16 fache Steifigkeit benötigt. Bereits der Steifigkeitsfaktor 4 ist mit den bekannten Möglichkeiten nicht erreichbar.

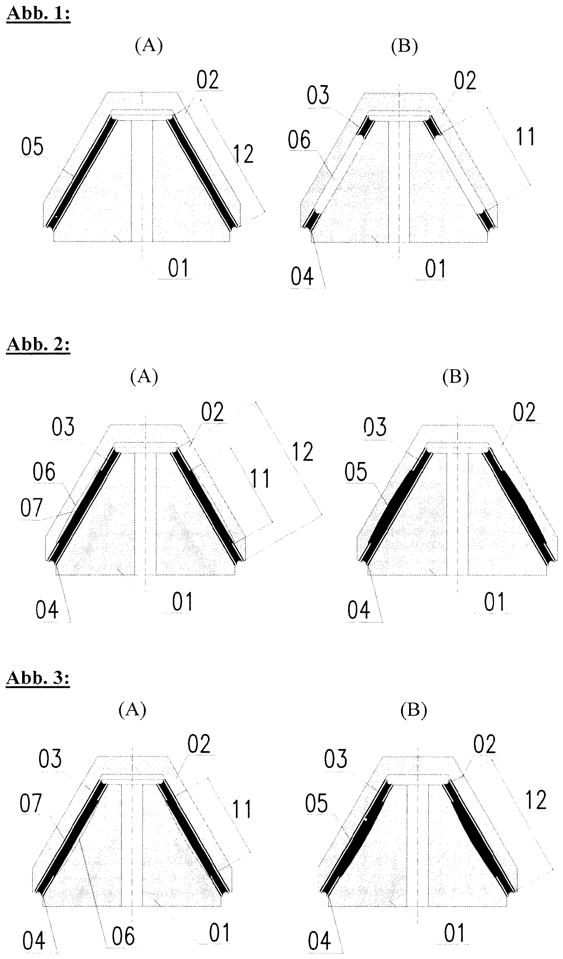

Die Abb. 1 - 3 stellen den nicht erfindungsgemäßen, grundsätzlichen Aufbau eines rotationssymmetrischen konischen Elastomerbauteils zur Funktionserklärung dar. Ein solches Bauteil besteht aus einem Innenkegel (01), der rotationssymmetrischen Elastomerschicht (05) und einem Außenkegel Position (02). In Abb. 1A ist die Elastomerschicht zwischen den Kegeln durchgängig. Dieses hat eine kaum veränderliche relativ hohe Steifigkeit. Derartige Tilger sind im Stan der Technik beschrieben. In Abb. 1B ist die besagte Elastomerschicht (gegenüber Abb. 1A) mittig unterbrochen, so dass ein Freiraum (06) entsteht. Dieses Bauteil hat eine um ein Vielfaches geringere Steifigkeit als das Bauteil in Abb. 1A. Das Steifigkeitsverhältnis hängt davon ab wie lang die Gummischichten (03) und (04) im Verhältnis zu dem Freiraum (06). (Länge [12-11] zu Länge [12]). Weiterhin hängt das Steifigkeitsverhältnis von der Schichtdicke des Elastomers ab. Man kann somit bei Schichtdicken von ca. 8 mm bei Längenverhältnissen ( Länge 12-11 zu Länge 12) zwischen 1,5 bis 5 Steifigkeitsverhältnisse von Faktor 10 bis 60 erreichen. Bei Bedarf können noch größere Steifigkeitsverhältnisse z.B. Faktor 100 erreicht werden. Bei größeren Schichtdicken sind zum Erreichen der gleichen Steifigkeitsverhältnisse größere Längenverhältnisse erforderlich. Da die Gummischichten (3) (4) eine Mindestlänge ( Länge =ungefähr Schichtdicke = 5mm-10mm) zur Anbindung der Gummischicht haben müssen, sind dazu entsprechend lange Kegel erforderlich. (für Schicht- Längenverhältnis 8 für Steifigkeitsfaktor 100 gilt: Länge "[12]" = ca. 8*2*Schichtdicke =ca. 128mm). In Abb. 2A ist dieser Freiraum, welcher in Abb. 1B mit (06) bezeichnet ist, teilweise mit Elastomer ausgefüllt. Der Freiraum (06) ist jedoch nach wie vor vorhanden, so dass die Steifigkeit des Bauteiles in Abb. 2A nur unwesentlich höher ist als die Steifigkeit in Bild 1B. In Abb. 2 B wurde nun der Innenkegel (01) in Richtung des Außenkegels (02) so weit verschoben, dass der Freiraum (06) geschlossen ist und sich damit eine geschlossene Kontur (05) bildet. Somit ist die Steifigkeit in Abb. 2B so groß wie die in Abb. 1A beschriebene Steifigkeit. Abb. 2 zeigt diese Funktion in der äußeren Grenze des Elastomerkegels, d.h. der Freiraum befindet sich zwischen Elastomer und äußerem Kegel. Abb. 3 zeigt eine ähnliche Funktion, jedoch ist hier der Freiraum zwischen Elastomer und innerem Kegel.

Die Abb. 1 - 3 zeigen in vereinfachter Form die prinzipielle Funktionsweise des erfindungsgemäßen Schwingungstilgers: zwischen maximaler Steifigkeit (Abb. 1A) und geringster Steifigkeit (Abb. 1B) können durch Einrichten von entsprechenden Freiräumen nahezu jede gewünschte Steifigkeit zwischen den beiden Extremen eingestellt werden, und damit Einfluss auf die zu dämpfenden Schwingungsfrequenzen genommen werden. Die Freiräume können dabei auf verschiedene Weise erzeugt werden: entweder weist die Elastomerschicht zwischen den Kegeln eine Aussparung, beispielweise eine bauchige Aussparung auf, oder aber das entsprechende feste Kegelteil besitzt eine solche rundum verlaufende bauchige, konkave, konvexe oder anderweitig geformte Aussparung oder Hohlstruktur.

Damit das System überhaupt funktionieren kann, muss der betreffende Innenkegel gegen den betreffenden äußeren Kegel verschoben werden. Das kann mittels eines Linearantriebes (Motor mit Spindel), elektromagnetisch, pneumatisch, hydraulisch oder Mischformen von diesen, gegebenenfalls unter Einbeziehung einer elektronischen Steuerung geschehen. Dabei kann sinnvollerweise das entsprechende konische Federelement (Kegelelement) selbst als Hydraulik- bzw. Pneumatik-Element eingesetzt werden.

Definitionsgemäß wird unterer einem Konuslager ein Lager verstanden, welches ein Innenkonuselement, und ein Außenkonuselement aufweist, welche durch mindestens eine elastische Schicht miteinander verbunden sind. Beide Konuselement besitzen eine axiale zentrale Bohrung. Eine solches Konuslager wird auch als Einfachkonuslager bezeichnet. Ferner kann auch ein Mehrfachkonuslager eingesetzt werden, welches aus einem besagten Außenkonuselement und einem besagten Innenkonuselement sowie einen oder mehreren Zwischenkonuslementen zusammengesetzt ist, welche wiederum alle durch elastische Schichten miteinander verbunden sind. Definitionsgemäß wird ferner unter einer Anordnung von Konuslagern (Einfach- oder Mehrfach-Konulslagern wie definiert) eine Gruppierung von mindestens zwei Konuslagern (Einfach- oder Merhfach-Konuslager) verstanden, welche gegenüber angeordnet bzw. platziert sind und funktionell in Zusammenhang stehen, wobei die Konuselemente entweder mit ihren breiten Basis, oder mit ihrer schmalen Basis gegenüberstehen, oder aber auch so angeordnet sind, dass die breite Basis des einen Konuselementes der schmalen Basis des gegenüberliegenden Konusteils gegenübersteht. Eine solche Anordnung aus zwei Konuslagern wird nach dieser Erfindung auch als Doppel-Konuslager bezeichnet. Die erfindungsgemäßen Schwingungstilger weisen stets mindestens ein entsprechendes Doppelkonuslager auf, können aber auch mehrere Doppelkonuslager besitzen.

Gegenstand der Erfindung ist somit ein adaptiver und ggf. aktiver Schwingungstilger mit den Merkmalen des Anspruchs 1. Merkmale dieses Anspruchs betreffend ist dies ein Schwingungstilger mit an die Erregerfrequenz angepasster einstellbarer Steifigkeit, umfassend mindestens ein rotationsymmetrisches unelastisches, vorzugsweise kegliges Innen-Konuselement (01)(108(307)(804) und mindestens ein rotationssymmetrisches unelastisches, vorzugsweise kegliges Außen-Konuselement (02)(202)(805), welches über das Innen-Konuselement gesteckt ist, wobei Innenkonuselement und Außenkonuselement durch eine ein- oder mehrschichtige Elastomerschicht (101)(208)(303)(304)(310) miteinander verbunden sind und jeweils mittig in axialer Richtung eine zylindrische Bohrung aufweisen zur Aufnahme von Befestigungs- oder Verspannungsvorrichtungen, wobei im Bereich der Elastomerschicht (101)(208)(303) (304)(310) entlang der Grenzfläche zum Innenkonus- und / oder Außenkonuselement ein im nicht verspannten Zustand vorhandener entsprechend der Konuselemente geformter vorzugsweise rotationssymmetrischer Freiraum (06)(103)(308)(802) vorgesehen ist, der teilweise oder vollständig die Grenzfläche zwischen Außenkonus-, und Innenkonuselement einnehmen kann, und das Innenkonuselement und / oder Außkonuselement in axialer Richtung durch technische Mittel und Vorrichtungen im oder außerhalb des Lagers beispielsweise mechanischer oder hydraulischer oder magnetischer Art verschiebbar ist. Hierdurch durch Kompression und teilweise Verdrängung der in den konischen Elementen vorhandenen Elastomerschicht in den besagten Freiraum teilweise oder ganz geschlossen, wodurch die Steifigkeit des Lagers oder Lagersystems entsprechend der zu dämpfenden Erregerfrequenz variiert und angepasst werden kann. Vorzugsweise besitzt besagter Freiraum (06)(103)(308)(802), der an der Grenzfläche der Elastomerschicht (101)(208)(303)(304)(310) gebildet wird, eine bauchige, konkave oder konvexe oder anderweitig geometrische Form, was durch entsprechende Gestaltung der Elastomerschicht aber auch des konischen Innen- und / oder Außenkegels in diesem Bereich erreicht wird. Um die gewünschte Adaptivität an die Steifigkeit zu erhalten, sollte der konusförmige Freiraum (06)(103)(308)(802) entlang der Grenzfläche zwischen Elastomerschicht (101)(208)(303)(304)(310) und Innenkegel oder zwischen Elastomerschicht und Außenkegel eine Länge aufweisen, die 20 bis 80%, vorzugsweise 40 - 70% der Länge der Kegel oder der Länge der Elastomerschicht zwischen den Kegeln entspricht. Ebenso sollte der konusförmige Freiraum (06)(103)(308)(802) entlang der Grenzfläche zwischen Elastomerschicht und Innenkegel oder zwischen Elastomerschicht und Außenkegel eine Dicke aufweisen, die 5 - 30%, vorzugsweise 10 - 20% der Dicke der Elastomerschicht zwischen den Kegeln entspricht. Durch diese Geometrien können Steifigkeitsfaktoren von mindestens 4, vorzugsweise > 4, insbesondere zwischen 10 und 150 erzielt werden, was eine Frequenzverschiebung (Erregerfrequenz) um den Faktor 3 - 20, vorzugsweise 3 - 10 zur Folge hat.

Durch die Lager kann die Steifigkeit vor allem in axialer Richtung (z-Achse) aber auch in radialer Richtung (x, y) adaptiert und variabel eingestellt werden, wobei die radiale Steifigkeit in bei einem festen Konuswinkel nicht so stark beeinflussbar ist wie in axiale Richtung und sich ohne weitere Maßnahmen mehr oder weniger gleichmäßig auf die x- und y-Richtung verteilt. Um eine unterschiedliche radiale x,y-Steifigkeit zu erreichen, kann wie in einer weiteren Ausführungsform gezeigt, die konusförmige Elstomerschicht (101)(208)(303)(304)(310) an einer oder mehreren Stellen einen direkten Zugang (2002) für mechanische oder hydraulische Mittel besitzen, wobei deren Zugang so platziert ist, dass in radialer (x,y) Richtung eine adaptierbare variable Steifigkeit erzielt wird, welche sich unterschiedlich in x- und y-Richtung auswirkt.

Die Konuslager können zusätzlich weitere Elastomerschichten und weitere Konuselemente aufweisen. Ferner kann der Konuswinkel α eines Konuselements kleiner sein als der Konuswinkel eines anderen Konuselements, so dass durch die unterschiedlichen Kegelwinkel radiale und axiale Schwingungen unterschiedlich beeinflusst werden können.

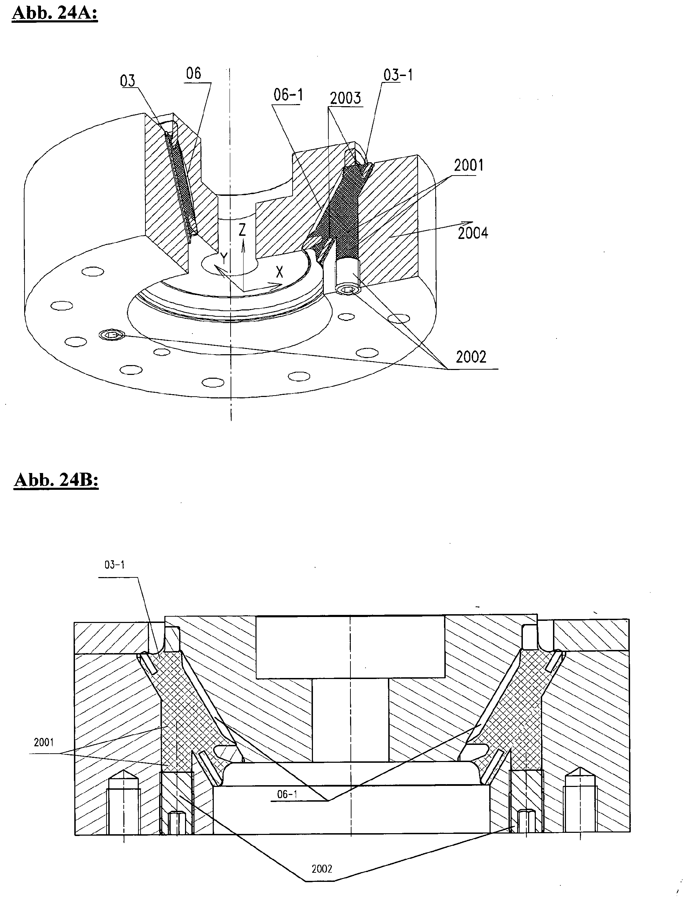

Es ist ferner vorteilhaft, auch weitere Freiräume, die durch Elastomermaterial ausgefüllt werden können, im Lager einzurichten, was zur deutlichen Variabilität der Steifigkeit sowie Erhöhung des Steifigkeitsfaktors führen kann. In einer Ausführungsform der Erfindung können beispielsweise zwei gegenüber positionierte Konuslager so eng zueinander angeordnet sein, dass ein Spalt (802) im unverspannten Zustand vorliegt. Dieser Spalt kann durch Verspannen der Konuselemente des Lagers teilweise oder ganz verschlossen werden, so dass hierdurch die Steifigkeit zusätzlich beeinflusst werden kann (Abb. 24).

In einer üblichen Ausführungsform weist das Konuslager oder die Anordnung von Konuslagern zwei Konuslager unter Bildung eines Doppelkonuslagers auf, welche gegenüber mit ihrer breiten und / oder kurzen Konusbasis angeordnet sind. Vorzugsweise zwischen den beiden Konuslagern, aber auch an anderen Stellen des Lagers oder außerhalb des Lagers befindet sich erfindungsgemäß eine mechanische, pneumatische, hydraulische oder magnetische Vorrichtung, die es ermöglicht, dass die jeweiligen frei beweglichen Innenkonuselemente oder Außenkonuselemente der beiden Konuslager axial vorzugsweise gegen die jeweiligen fixierten Außenkonuslemente bzw. Innenkonuselemente verschoben werden können, und somit Elastomermaterial in die besagten Freiräume der Lager gepresst werden kann. Die axiale Verschiebung der Konuselemente kann dabei durch hydraulische, pneumatische, mechanische oder magnetische Mittel aktiv oder passiv erfolgen. In einer besonderen Ausführungsform erfolgt die axiale Verschiebung der funktionellen Konuselemente durch ein oder mehrere Flachmagnete vorzugsweise durch aktive Ansteuerung, wie unten näher beschrieben.

Es ist vorteilhaft die Konuslager oder Anordnungen von Konuslagern mit Sensoren sowie gegebenenfalls elektronische computergesteuerte Einrichtungen auszustatten, welche eine Veränderung der Erregersequenz messen und aus der gemessenen Veränderung der Erregerfrequenz eine automatische Anpassung der Steifigkeit durch axiale Verschiebung der entsprechenden Konuselemente bewirken. Die entsprechende technische Ausrüstung ist im Stand der Technik prinzipiell bekannt.

Gegenstand ist ferner ein Doppelkonuslager, bei welchem zwei Einfach- oder Merfachkonuslager, wie oben oder in den Ansprüchen definiert, mit ihrer breiten oder schmalen Basis gegenüber angeordnet sind, die Innenkonuselemente (01)(108(307)(804) über eine Elastomerschicht (1) mit einer axialen zylindrischen Hülse (13) um die mittige axiale Bohrung verbunden sind, und Druckmittel vorhanden sind, mittels derer die betreffenden Konuselemente der Konuslager in axialer Richtung bewegt werden können, wodurch die besagten Freiräume (06)(103)(308) in den Konussen mit Elastomermaterial gefüllt werden und somit die Steifigkeit des Lagers variiert werden kann. In einer besonderen Ausführungsform befindet sich vorzugsweise zwischen den beiden gegenüberliegenden Konuslagern eine Druckkammer, welche mittels mechanischer, hydraulischer, pneumatischer oder magnetischer Mittel mit Druck beaufschlagt werden kann, so dass die jeweiligen frei beweglichen Innenkonuselemente axial auseinander und gegen ihr jeweiliges festes Außenkonuselement gedrückt werden können und somit Elastomermaterial (101)(208)(303) (304)(310) in die besagten Freiräume (06)(103)(308) der Lager gepresst wird. Die Erfindung umfasst auch solche Lager, bei denen freibewegliche Außenkonuselemente gegen festmontierte Innenkonuselemente verschoben werden können.

Gegenstand der Erfindung sind Schwingungstilger umfassend eine Tilgermasse und mindestens ein Doppelkonuslager, wie oben und folgend beschrieben. und in den Merkmalen des Anspruchs 1 definiert. Ein erfindungsgemäßer Schwingungstilger kann aus einem, zwei, drei oder mehreren, vorzugsweise funktionell zusammenwirkenden Doppelkonuslagern aufgebaut sein.

Die entsprechenden Konuslager oder Anordnungen von Konuslagern, insbesondere Doppelkonuslagern, sowie die entsprechenden mit diesen Lagern ausgestatten Schwingungstilger können insbesondere zur Dämpfung von Schwingungen in Anlagen und Maschinen mit variabler Drehzahl und / oder Erregerfrequenz, insbesondere in Windkraftanlagen eingesetzt werden.

Gegenstand der Erfindung sind somit auch Windkraftanlagen, in denen die erfindungsgemäßen Schwingungstilger im Bereich der Rotornabe, der Rotorblätter, des Getriebestranges oder des Turmes angeordnet sind, wobei vorzugsweise 4 - 48, vorzgsweise 6 - 36 Schwingungstilger vorzugsweise im Bereich der Rotornabe vorzugsweise symmetrisch angeordnet sind, um Vibrationen durch Drehzahländerungen von Rotor und / oder Getriebe zu reduzieren.

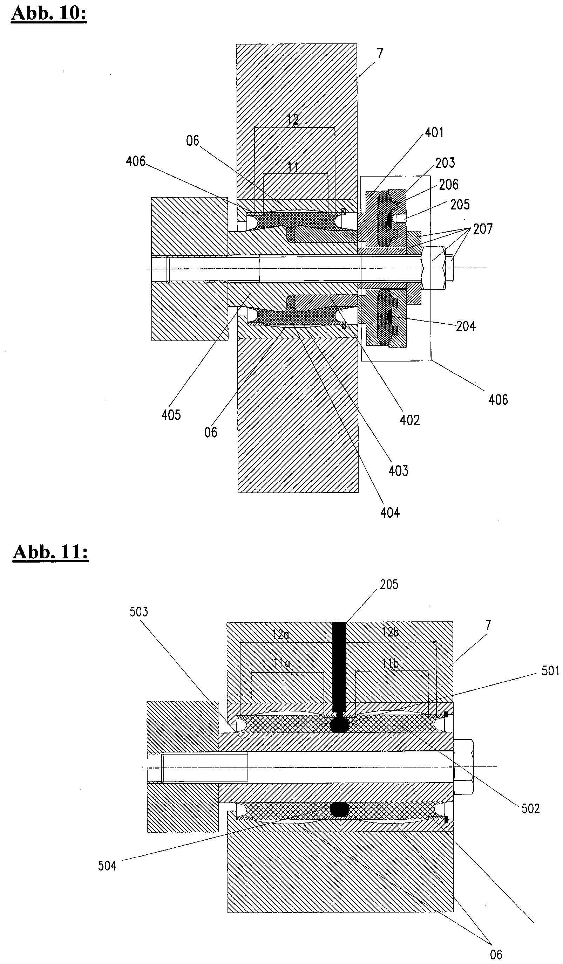

Das Erfindungsprinzip lässt sich auch prinzipiell auf Tilger und Lager in diesen Tilgern anwenden, welche nicht nur die entsprechenden beschriebenen Doppel- oder Mehrfach-Konuselementen betreffen, sondern auch auf entsprechende Tilger und Lager auf Basis entsprechend ausgestatteter zylindrischer elastischer Doppel- oder Mehrfachbuchsen mit entsprechenden Freiräumen, Spalten, Hohlräumen, welche entsprechend durch Verschieben von inneren und äußeren zylindrischen Buchsen und damit verursachtes Einpressen von Elastomermaterial ganz oder vollständig geschlossen werden können, womit die Steifigkeit adaptiv und geregelt eingestellt werden kann (Abb. 10 - 12)

Die Beschreibung betrifft somit auch ein adaptives Buchsenlager oder eine Anordnung von Einfach- oder Mehrfachbuchsenlagern mit an die Erregerfrequenz angepasster Steifigkeit, im Wesentlichen umfassend mindestens ein rotationsymmetrisches unelastisches, vorzugsweise zylindrisches Innen-Buchsenelement und mindestens ein rotationssymmetrisches unelastisches, vorzugsweise zylindrisches Außen-Buchsenelement, welches passend über das Innen-Buchsenelement gesteckt ist, wobei Innenbuchsenelement und Außenbuchsenelement durch eine ein- oder mehrschichtige Elastomerschicht mit einander verbunden sind und jeweils mittig in axialer Richtung eine zylindrische Bohrung aufweisen zur Aufnahme von Befestigungs- oder Verspannungsvorrichtungen, wobei im Bereich der Elastomerschicht entlang der Grenzfläche zum Innenbuchsen- und / oder Außenbuchsenelement ein im nicht verspannten Zustand vorhandener entsprechend der Buchsenelemente geformter rotationssymmetrischer Freiraum vorgesehen ist, der teilweise oder vollständig die Grenzfläche zwischen Außenbuchsen-, und Innenbuchsenelement einnehmen kann, und das Innenbuchsenelement und / oder Außbuchsenelement in axialer Richtung durch technische Mittel und Vorrichtungen im Lager verschiebbar ist, so dass die beiden zylindrischen Buchsenelemente verspannt werden, und dabei der besagte Freiraum durch Kompression und teilweise Verdrängung der vorhandenen Elastomerschicht zwischen den Buchsenelementen teilweise oder ganz geschlossen wird, wodurch die Steifigkeit des Lagers oder Lagersystems entsprechend der zu dämpfenden Erregerfrequenz variiert und angepasst werden kann.

Die erfindungsgemäßen Tilger wie folgend näher beschrieben, eigenen sich, wie bereits gesagt, vor allem für ihren Einsatz in Windkraftanlagen. Weitere Einsatzbereiche sind der Fahrzeugbereich insbesondere Drehgestelle und Waggons von Eisenbahnfahrzeugen, landwirtschaftliche Maschinen, Baufahrzeuge, Krane Schiffe Im Antriebsbereich und in der gesamten Schiffshaut und an Anbautreilen un inneren Einrichtungen, insbesondere in Personenschiffen.

Es werden hier adaptive Tilger und Lager beschrieben, bei denen die Eigenfrequenz des Federmassesystems durch unterschiedliche Möglichkeiten eingestellt werden kann. Durch die besondere Konstruktion mit entsprechenden positionierten Freiräumen und Spalten können so erfindungsgemäß Steigerungen der Steifigkeit um denn Faktor 10 - 150 erreicht werden, was einen ansprechbaren zu dämpfenden Frequenzbereich etwa um den Faktor 3 - 12 entspricht, verglichen mit einem herkömmlichen elastischen Lager oder Tilger des Standes der Technik. Das Lager / Tilgersystem wird in der Regel als Kernstück von Schwingungstilgern, die in einem breiten Frequenzbereich arbeiten sollen, eingesetzt.

Erfindungsgemäß ist es möglich, erfindungsgemäßen einstellbaren Schwingungstilger auch aktiv zu betreiben, also mit Aufbringen einer Kraft in Erregerfrequenz. Der Vorteil dabei ist, dass ein größerer Schwingungstilger Effekt mit gleicher Masse oder ein gleicher Effekt mit deutlich geringerer Masse erzielt werden kann. Gegenstand der Erfindung ist somit auch ein entsprechender adaptiver und aktiver Schwingungstilger, welcher auch aktiv betrieben werden kann.

Aktive Schwingungstilger werden in der Regel mit Tauch-Spulensystemen angetrieben. Bei unserem System, das für kleine Amplituden ausgelegt ist werden Elektro-Zug-Druck Magnete verwendet. Im Gegensatz zu Tauch Spulen lassen diese zwar nur geringe Federwege zu, können jedoch deutlich höhere Kräfte bewirken.

Eine Aktivierung der erfindungsgemäßen Tilger kann beispielsweise durch zusätzlich angeordnete Elektromagneterreicht werden. Dazu hat sich überraschenderweise herausgestellt, dass Flachmagnete, insbesondere flache Elektro-Zug-Druckmagnete, hierfür bestens geeignet sind im Gegensatz zu den bisher nach dem Stand der Technik bekannten Tauchspulen. Der Vorteil der Flachmagnete ist, dass diese auf kleinem Bauchraum große Kräfte entwickeln können und auch kostengünstiger und weniger sensibel als Tauchspulen sind.

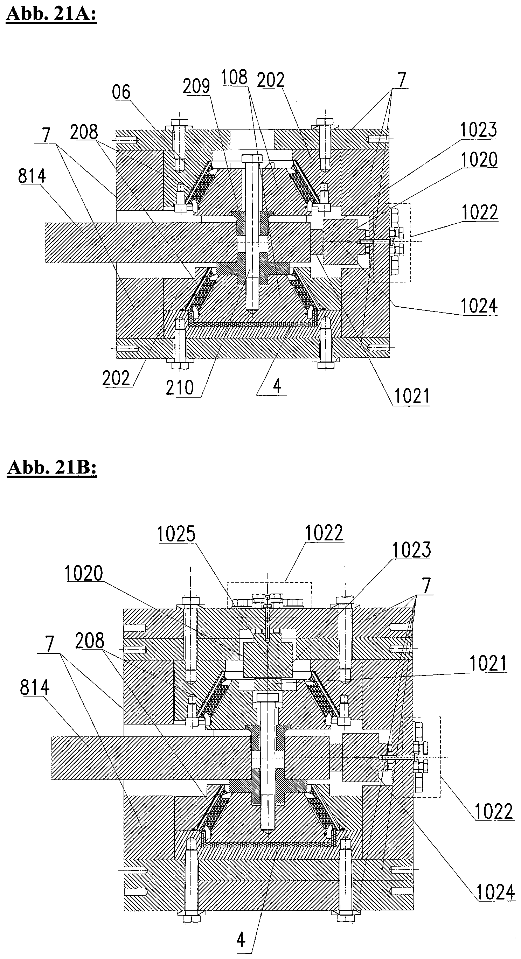

Die erfindungsgemäßen Tilger und Lager in diesen Tilgern können prinzipiell wie folgt geregelt und gesteuert werden:
Adaptives System: (i) Steuerung des adaptiven Tilgersystems: bei diesem System wird der Druck abhängig von der gewünschten Frequenz über ein Tilgerkennfeld gesteuert. Diese Frequenz ist zum Beispiel von der Drehzahl abhängig. Somit wird der Druck in direkter Abhängigkeit von der Drehzahl gesteuert. (ii) Regelung des adaptiven Tilgersystems: bei diesem System wird ständig die anregende Schwingung und die Schwingung des Tilgers in Phase und Betrag mit einem Beschleunigungs-Sensor gemessen und die Differenz der beiden Phasen Winkel (Phasenverschiebung) ermittelt. Durch die Phasenverschiebung lässt sich das Eigenfrequenzverhalten des Tilgers so bestimmen, dass die Eigenfrequenz des Tilgers der Störfrequenz angepasst wird. Ist die Phasenverschiebung kleiner als ein gewünschter Sollwert, so wird der Hydraulik-bzw. Gas-Druck des Systems erhöht. Ist die Phasenverschiebung größer als der Sollwert so wird der Druck verringert. Diese Abläufe geschehen in kleinen Stufen, so dass ständig nachgeregelt wird. Zwischen Tilger und Hydraulikaggregat sind dazu beispielsweise zwei Ventile (1026) (1027) geschaltet. Zur Erhöhung des Druckes wird das Einlassventil (1026) und zur Senkung des Drucks das Auslassventil (1027) kurzzeitig geöffnet und der Phasenwinkel gemessen. Der Vorgang wird so oft wiederholt, bis der richtige Phasenwinkel (Sollwert) erreicht ist. Mit dieser Regelung können eventuelle Amplituden-, Temperatur- und Frequenzabhängigkeiten oder andere Veränderungen des Tilgers ausgeglichen werden. Außerdem kann sich der Tilger/das Lager Änderungen der anregenden Schwingung anpassen. Wenn sich, z.B., die anregende Schwingung mit der Drehzahl in der Frequenz oder Amplitude ändert, kann die Regelung den Tilger/das Lager so verstellen, dass der vorgegebene Sollwert erreicht wird und so der Tilger/das Lager optimal wirkt. Das zu beruhigende System kann mit einem oder mehreren Tilgern bestückt sein. Ist das anregende System mit mehreren Tilgern bestückt, dann kann ein Tilger geregelt werden und die anderen Tilger sind hydraulisch, pneumatisch oder elektrisch parallel geschaltet und sehen die gleiche Vorspannung wie der geregelte Tilger, müssen also nicht separat geregelt werden. Wird ein System durch viele Tilger beruhigt, dann kann auch jeder Tilger mit eigener Regelung ausgestattet sein.
Aktives System (Abb. 21): Parallel zur Regelung des adaptiven Systems wird ein Magnet-Erreger (1020) und (1021) zwischen Schwingungstilger und anregendem System geschaltet und übt damit zusätzliche Kräfte zwischen Schwingungstilger und anregendem System aus. Er wird vorzugsweise bei der ermittelten Störfrequenz betrieben. Die Kraftamplitude und die Phasenverschiebung zwischen der Kraft des Magnet-Erregers und der Schwingung des anregenden Systems muss mittels eines geschlossenen Regelkreises ermittelt werden. Dabei wird das anregende System durch einen Beschleunigungssensor beobachtet und die Kraftamplitude und die Phasenverschiebung so lange geändert, bis der Beschleunigungssensor anzeigt, dass die Schwingung des anregenden Systems minimal ist. Da die Eigenfrequenz des Tilgers durch den adaptiven Regelkreis der Störfrequenz angepasst wird, und der Magnet-Erreger auch bei dieser Frequenz arbeitet, geht nur ein kleiner Kraftanteil des Magnet-Erregers durch die interne Tilger-/Lagerdämpfung verloren. Der verbleibende, größere Anteil kann für die Reduzierung der Systemschwingungen genutzt werden. Alternativ zu dem hydraulischen oder pneumatischen System kann man auch ein elektrischer Linear -Stellmotor eingesetzt werden.

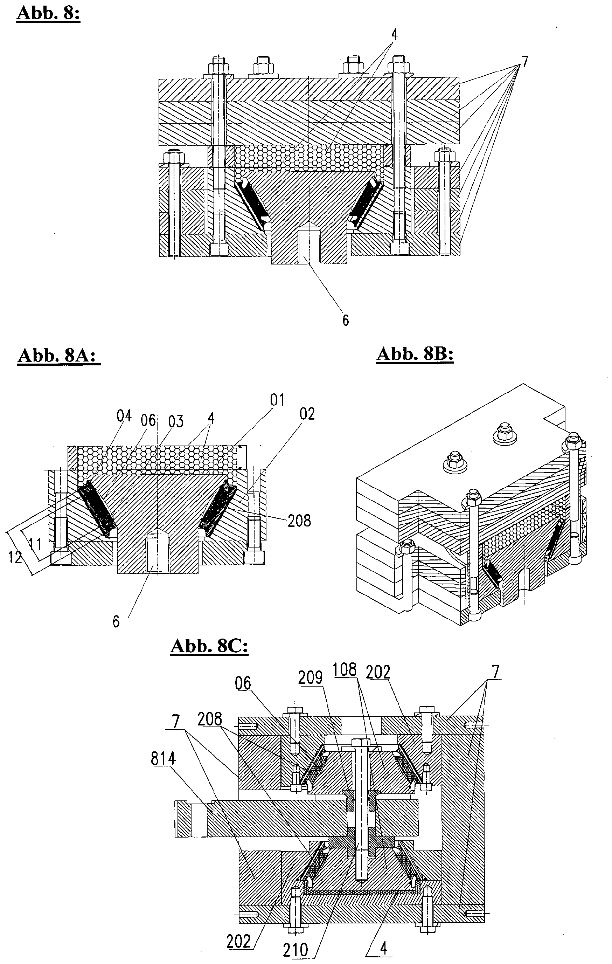

Die Schwingungstilger und Lager zeichnen sich zusammengefasst, wie folgt aus:
- Steifigkeitsverstärkung durch Schließen des Spaltes, Hohlraumes oder Freiraumes
- Wirksam in radialer und axialer Richtung
- Erhöhung des Steifigkeit maximal um den Faktor 10 - 150, und entsprechend angepasste Erhöhung der Erregerfrequenz maximal um den Faktor 3 - 20.
- Ansteuerbar durch hydraulische, pneumatische oder mechanische Systeme
- Einsatz in Maschinen, in denen eine variable Steifigkeit benötigt wird: z.B. für Radsatzführung bei Schienenfahrzeugen, Windkraftanlagen, insbesondere im Bereich des Getriebes , der Rotornabe, der Gondel und des Turmes. Hierfür werden beispielsweise 4 - 48 entsprechende erfindungsgemäße Tilger, vorzugsweise symmetrisch um die Rotornabe, das Getriebe oder den Turm angeordnet, wobei in einer besonderen Ausführungsform Dualeinheiten von Tilgern, wie z.B. in Abb. 8 abgebildet, zum Einsatz kommen können.
- Bei all diesen Systemen, insbesondere bei Windkraftanlagen, wird der Druck als Funktion der Anregungsfrequenz geregelt. Um die Toleranz, Temperatur- und Alterungseigenschaften der Elastomere auszugleichen, wird die Eigenfrequenz des Tilgers und damit der aufzubringende Druck in Abhängigkeit von der zu tilgenden Betriebsfrequenz und der Phasenlage des Tilgers zur Betriebsschwingung ständig überwacht und geregelt. Dies kann durch elektronische Sensoren computergesteuert manuell oder automatisch durch an sich im Stand der Technik vorhandene Mittel erfolgen. Insbesondere bei Windkraftanlagen können dadurch unterschiedlich auftretende variable Schwingungen permanent gedämpft werde, wodurch auch Belästigungen durch Geräusche und Vibrationen in der Anlage stark reduziert und sogar eliminiert werden können.

Kurze Beschreibung der im Text, in den Ansprüchen und in den Abbildungen verwendeten Bezugsgrößen:
- 01: Innenkegel/Innenkonus
- 02: Außenkegel/Außenkonus
- 03: Kegelige Elastomerschicht oben
- 04: Kegelige Elastomerschicht unten
- 05: über gesamte Länge geschlossene Elastomerschicht
- 06: Freiraum
- 1: Elastomerschicht zylindrisch
- 2: Elastomerschicht kegelig
- 3: Zur Versteifung aufzufüllender Freiraum
- 4: Druckkammer
- 5: Druckanschluss
- 6: Befestigung
- 7: Tilgermasse
- 8: Zwischen kegel
- 9: Außenkegel
- 10: Blech kurz
- 11: Länge der kurzen Kegel
- 12: Länge der langen Kegel
- 13: Innenhülse
- 101: Konusschicht
- 102: Schiebeelement
- 103: Zur Versteifung auszufüllender Bereich
- 104: Druckkammer
- 105: Druckanschluss
- 106: Befestigung
- 107: Masse
- 108: Innenkegel
- 109: äußerer Schiebebereich
- 110: Länge kurze Kegel
- 111: Länge lange Kegel
- 112: Membran
- 202: Außenkonus
- 203: Druckplatte
- 204: Membran Hohlraum
- 205: Druckanschluss
- 206: Druckelastomer
- 207: Axialklemmung
- 208: Konische Elastomerschicht
- 209: Einstellschraube mit Innensechskant
- 210: Verbindungsschraube
- 301: Masse
- 302: Befestigung
- 303: Elastomerschicht innen
- 304: Elastomerschicht außen
- 305: Druckraum
- 306: Druckanschluss
- 307: Kegel innen
- 308: Freiraum
- 309: Zwischenkegel
- 310: Zylindrische bis leicht konische Außenschicht
- 401: Druckstück
- 402: Schiebeelement
- 403: Elastomer-Verdrängungsvolumen
- 404: Elastomer
- 405: Innenbuchse
- 406: Hydraulikelement
- 501: Ringförmiger Kompressionsraum
- 502: Elastomer
- 503: Innenbuchse
- 504: Ausdehnungsform vergrößert dargestellt
- 505: Außenbuchse
- 601: Endblech Ring
- 602: Achse mit Einschnürung
- 701: Tilger Anordnung an Rotorwelle
- 702: Tilger Anordnung an Getriebe
- 703: Tilger Anordnung an schnelllaufenden Generator und am mittel schnelllaufenden Generator
- 704: Tilger Anordnung am Maschinenträger
- 705: Tilger Anordnung an Nebenaggregaten
- 706: Tilger Anordnung am Turm
- 707: Tilger Anordnung an Rotornabe
- 708: Tilger Anordnung am Langsam Laufenden Generator
- 709: Tilger mit zwei Funktionsteilen und einer gemeinsamen Masse am Generator befestigt
- 710: Tilger Anordnung an- oder in den Rotorblättern
- 801: Elastomerschicht
- 802: zu schließender Spalt
- 803: Länge der Elastomerschicht
- 804: innerer Kegel
- 805: äußerer Kegel
- 810: Luftbalg zum Aufbringen der axialen Kraft
- 811: Zugplatte für Luftbalg
- 812: Befestigungselement
- 813: Befestigungs- Schraube
- 814: Maschinen Anschluss
- 1020: Elektromagnet Aktuator
- 1021: Elektromagnet Stator
- 1022: Befestigung-und Einstellschrauben für Elektro Magnet
- 1023: Luftspalt
- 1024: Magnet Kraftrichtung radial
- 1025: Magnet Kraftrichtung axial
- 1026: Einlassventil
- 1027: Auslassventil
- 2001: komprimierbares Volumen der Elastomerschicht
- 2002: Vorrichtung zum Komprimieren der Schicht 2001 (z.B. Stellschraube, Hydraulik)

Im Folgenden werden mehrere typische Ausführungsformen des erfindungsgemäßen einstellbaren Schwingungstilgers sowie andere Ausführungsformen eines Tilgers bzw. des Konuslagers oder auch zylindrischen Lagers beschrieben, ohne dass dabei das allgemeine Erfindungsprinzip eingeschränkt werden soll.

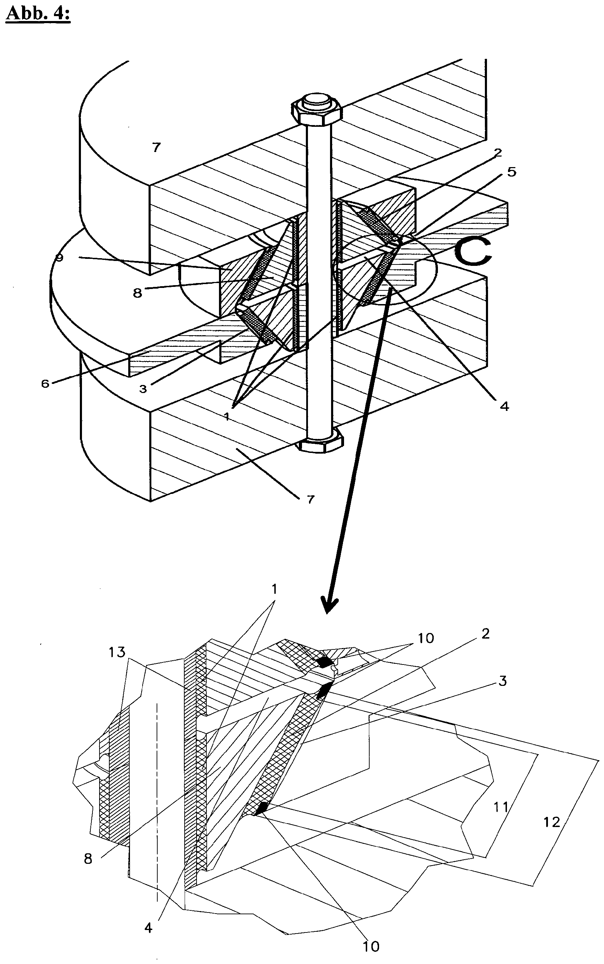

Eine mögliche Ausführung zeigt beispielhaft Abb. 4. Bei dieser Ausführung sind zwei konische rotationssymmetrische Elastomerlager so gegeneinander verspannt, dass zwischen den beiden Elementen ein Hohlraum entsteht. Parallel zur konischen Elastomerfeder ist eine zylindrische Elastomerfeder (1) angeordnet. Diese weist eine hohe radiale Steifigkeit auf, welche deutlich höher ist als die der konischen Elastomerelemente (2). In axialer Richtung ist die Elastomerfeder verschiebbar. Durch diese Anordnung können die beiden Zwischenkegel (8) in axialer Richtung bewegt werden. Die Bewegung wird aktiviert, indem die Druckkammer (4) über einen Druckanschluss (5) mit Druck beaufschlagt wird, so dass sich die beiden Zwischenkegel (8) voneinander weg bewegen und eine Kompression in den Elastomerschichten (2) verursachen. Werden die Elastomerschichten (2) gesteuert komprimiert, so schließt sich der zur Versteifung aufzufüllende Freiraum (3) kontinuierlich bis dieser komplett geschlossen ist. Somit lässt sich die Steifigkeit der beiden Konuslager in radialer Richtung und auch in axialer Richtung deutlich vergrößern. Wie eingangs beschrieben, kann hier Faktor 10 bis etwa Faktor 100 in der Steifigkeit erreicht werden. Die Frequenzverschiebung ist damit ohne weitere Maßnahmen um den Faktor 3 - 10 möglich. Bei der Verwendung sehr langer Gummischichten sind noch größere Faktoren (bis 30) möglich. Vorzugsweise wird als Druckelement Pressluft oder eine Flüssigkeit verwendet. Aufgrund der Situation, dass keine gleitenden Elemente vorhanden sind, kann als Flüssigkeit Wasser, oder auch Wasser-Glykol verwendet werden. Grundsätzlich sind bei Anpassung des Elastomers an die Flüssigkeit alle Flüssigkeiten einsetzbar.

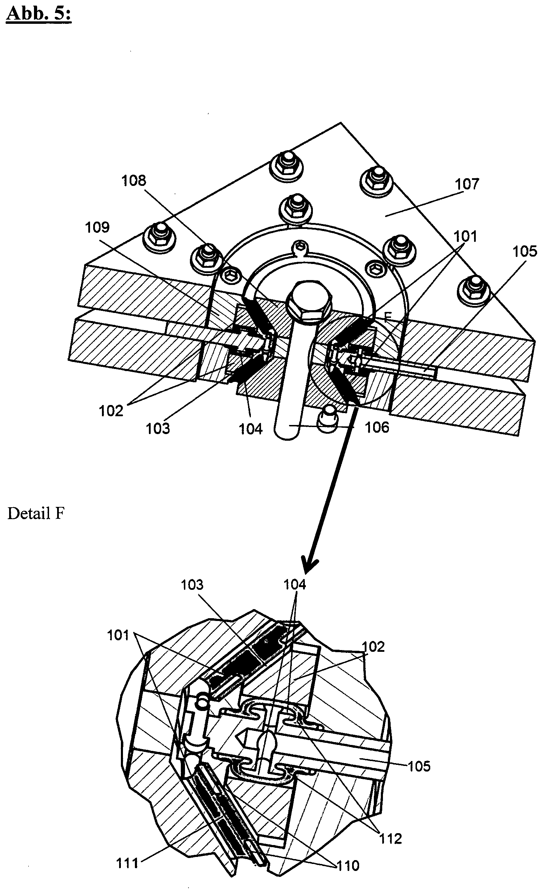

Abb. 5 zeigt eine weitere Ausführung, bei welcher der zur Versteifung auszufüllende Bereich (103) durch ein zusätzliches Schiebeelement (102) geschlossen wird. Die Schiebeelemente (102) werden beispielsweise mittels Hydraulik-oder Pneumatikdruck gegen den Spalt (103) gepresst. Der erforderliche Druck wird in den Druckkammern (104) aufgebracht. Zwischen den Druckkammern (104) und den Schiebeelementen (102) ist jeweils eine Membran (112) angeordnet, so dass keine Flüssigkeit in den Spalt (103) eindringen kann.

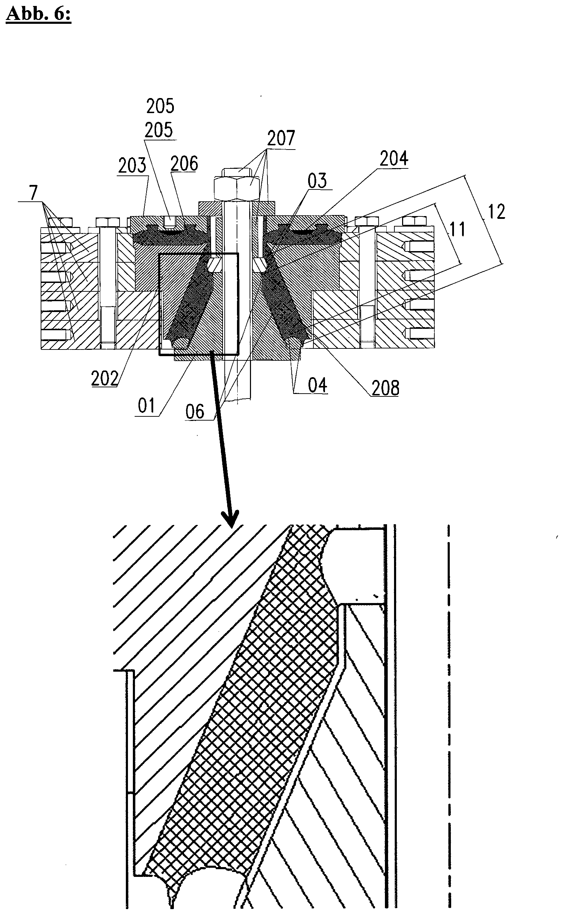

Eine weitere, nicht erfindungsgemäße Ausführungsform zeigt Abb. 6. Das rotationssymmetrische Bauteil, enthält eine konische Elastomerschicht, welche mit einer zylindrischen Elastomerschicht (206) in Verbindung steht. Die rotationssymmetrische, konische Elastomerschicht (208) ist am Außenkonuselement (202) vorzugsweise komplett anvulkanisiert oder mit diesem anderweitig fest verbunden, während sie innen nur oben (03) und unten (04) mit einem Bauteil höherer Festigkeit, zum Beispiel Stahl, verbunden ist. Zum Innenkegel / Innenkonuselement (01) hat das Elastomer keine Verbindung. Hier ist ein Spalt (06) vorhanden. Sobald das Element vorgespannt wird, schließt sich der Spalt (06) kontinuierlich mit dem durch die axiale Verschiebung verdrängten Elastomer, so dass sich beim kontrollierten Füllen des Spaltes die Steifigkeit kontrolliert erhöht. Die Vorspannung erfolgt durch Druck-Beaufschlagung im oberen zylindrischen Bereich des Bauteiles. Dazu wird ein Medium (beliebige Flüssigkeit oder Pressluft) durch den Druckanschluss (205, 204) eingebracht. Dadurch bildet sich ein Hohlraum (204) zwischen der Druckplatte (303) und dem im Bereich (204) nicht angebundenen Druckelastomer (206). Das Druckelastomer (206) kann wie dargestellt, einschichtig sein. Um größere Stellwege realisieren zu können, kann dieses Bauteil auch mehrschichtig ausgeführt sein. Das Druck-Elastomer (206) wird somit verdrängt und verschiebt dadurch Außenkonus (202) nach unten, so dass dieser die konische Elastomerschicht (208) ebenfalls verdrängt. Dadurch schließt sich der Spalt (06) kontinuierlich, wodurch die Steifigkeit wiederum kontrollierbar erhöht wird. Die Tilger-Masse (7) kann am Außenkegel / Außenkonuselement (202) befestigt werden. Damit bildet beides zusammen einen einstellbaren Tilger. Bei Bedarf können an einer Maschine mehrere solcher Tilger angebracht werden.

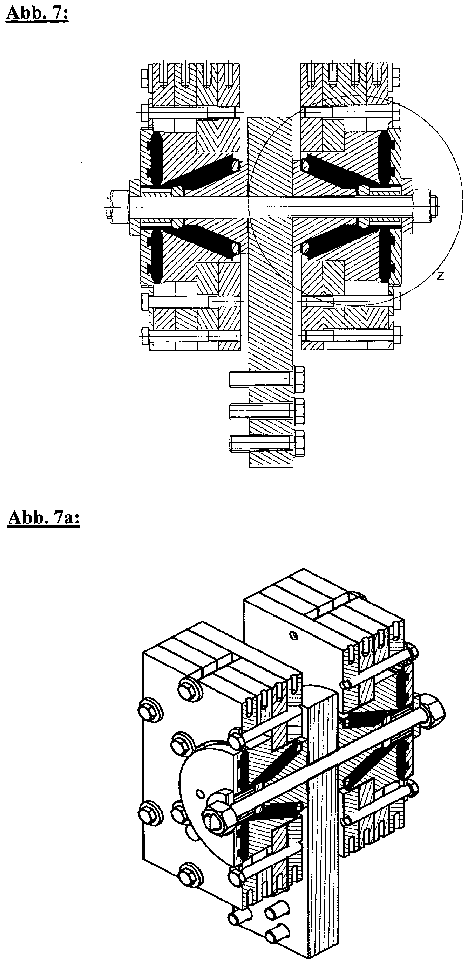

Abb. 7 zeigt beispielhaft die symmetrische Anordnung von 2 Tilgern an einem Maschinenbauteil, wobei hier ein Tilger aus einem Doppelkonuselement, wie beschrieben, besteht, und beide Konusteile, sich mit ihren breiten Basisseiten gegenüberstehen, dass sie ein O-Form bilden. Es ist aber auch prinzipiell möglich, dass in den erfindungsgemäßen Tilgern und Lagern die Konuselemente nicht nur mit ihrer breiten Basis gegenüberliegen, sondern auch mit ihrer kurzen Basis (x-Form). Weiterhin ist es prinzipiell möglich, dass die erfindungsgemäßen Doppel- oder Mehrfachkonuselemente eine gleiche Ausrichtung besitzen.

Eine weitere Ausführung zeigt Abb. 8A mit der Detailansicht in Abb. 8B. Dieses zeigt ein sehr einfaches System mit der Druckkammer (4) in der das Druckmedium einseitig auf den Innenkegel (01) drückt. Vorteil bei diesem System ist, dass das Druckmedium mit dem Innenkegel (01) des Doppelkonuselementes auf einer großen Fläche in Berührung kommt, so dass mit niedrigem Druck gearbeitet werden kann. Das Druckmedium kann gasförmig (Pressluft) oder auch flüssig sein. Dieses wird über einen nicht dargestellten Anschluss in die Druckkammer (4) gepresst. Ein weiterer Vorteil ist, dass nur ein bewegtes Element mit einer bewegten Elastomerschicht (208) erforderlich ist. Mit der in Abb. 8C dargestellten Ausführung werden mit einer Druckkammer (4) gleichzeitig zwei in Reihe angeordnete Doppel- oder Mehrfachkonuslager verspannt. Der Vorteil ist zum einen die Minimierung des Hydrauliksystems (nur eine Druckkammer), wobei die beiden Außenkonuselemente (202) über die Masse (7) miteinander verbunden sind. Beim Komprimieren der Flüssigkeit in der Druckkammer (4) wird die Masse (7) (in dem Bild) nach unten bewegt. Beide Außenkegel (202) sind mit der Masse verbunden und werden somit gleichzeitig "nach unten" bewegt, so dass die Vorspannung und damit die Steifigkeit ansteigt. Der Vorteil von zwei oder mehr hintereinander angeordneten Konuslagern ist die größere Steifigkeit gegen kardanische Bewegung (mit "kardanische Bewegung" ist die Drehung der Masse um die Bildachse gemeint). Die Einstellschraube mit Innen-Sechskant dient der Justierung der beiden Innenkegel (108). Die Justierung wird vor dem Einbringen der Schraube (210) durchgeführt. Zur Justierung wird in die Bohrung des oberen Innenklägers ein Sechskantschlüssel eingeführt mit welchem die Mutter (209) gedreht wird, so dass die gewünschte Vorspannung der beiden erfindungsgemäßen Konuslager gewährleistet ist.

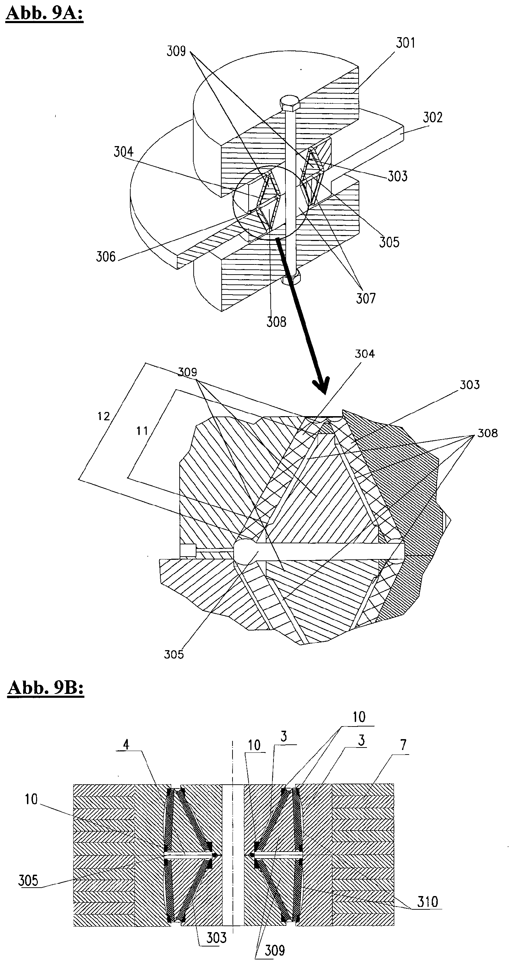

Abb. 9 zeigt einen Schwingungstilger mit doppel-kegeligem Elastomer Element. Dieser ist rotationssymmetrisch und besteht aus der Masse (301), einer Befestigungsplatte (302), einer inneren Elastomerschicht (303) und einer äußeren Elastomerschicht (304) sowie Hohlräumen (308). Sobald ein Druckmedium in die Kammer (305) eingebracht wird, schieben sich die beiden Druckkegel (309) auseinander und verschließen damit die freie Räume (308), so dass die Steifigkeit des Systems, wie bei den anderen Systemen beschrieben, kontinuierlich erhöht wird. Gegenüber dem in Abb. 4 beschriebenen System sind beide Schichten an der progressiven Versteifung beteiligt. Der Nachteil ist der höhere Platzbedarf in radialer Richtung.

Abb. 10 zeigt beispielhaft ein System, welches nicht konisch sondern zylindrisch ausgeführt ist. Die Wirkrichtung erfolgt vorzugsweise in radialer Richtung. Durch Verschieben des Schiebeelementes (402) wird das Verdrängungsvolumen (403) in das Elastomer (404) eingepresst. Somit verschließt sich der Spalt (06) kontinuierlich, was eine Erhöhung der radialen Steifigkeiten bewirkt. Das Schiebeelement wird von einem Hydraulikelement (406) bewegt. Dabei handelt es sich um ein ähnliches Element wie in Abb. 6. Dieses Element kann wie dargestellt, einschichtig oder auch mehrschichtig sein, so dass größere Wege bewältigt werden können. An dieser Stelle kann auch ein beliebiges Hydraulikelement nach dem Stand der Technik eingesetzt werden.

Abb. 11 zeigt ebenfalls ein buchsenförmiges System. Bei diesem System sind zwei Buchsen hintereinander angeordnet. Zwischen den beiden Buchsen ist ein Hohlraum (501) vorgesehen, der durch Druckbeaufschlagung über den Anschluss (505) das Volumen in einer ähnlicher Form wie in (504) dargestellt, bringt. Somit verschließt sich auch hier wiederrum der Spalt (06) so dass durch den Druck die Steifigkeit steigt.

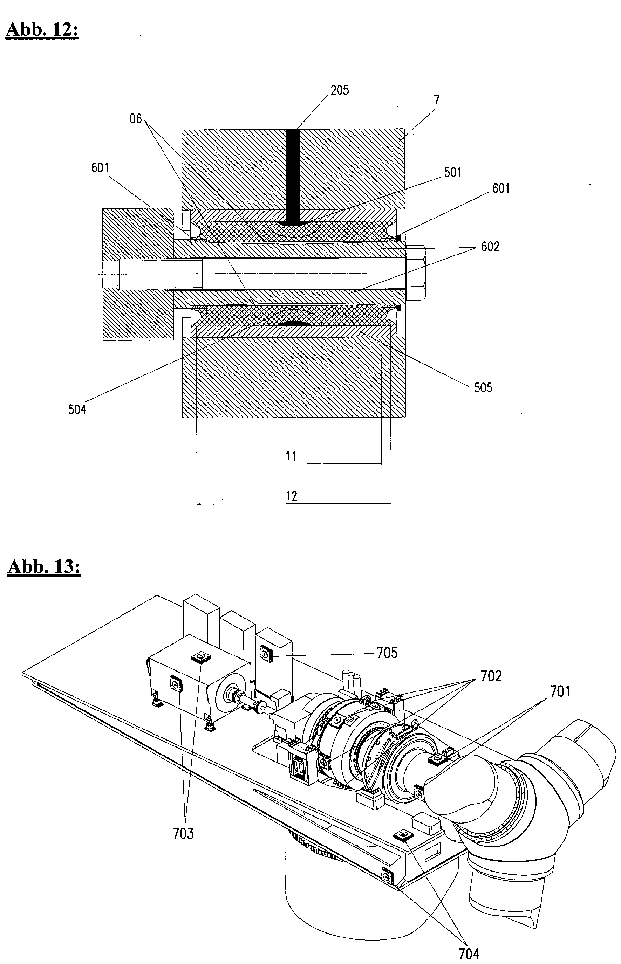

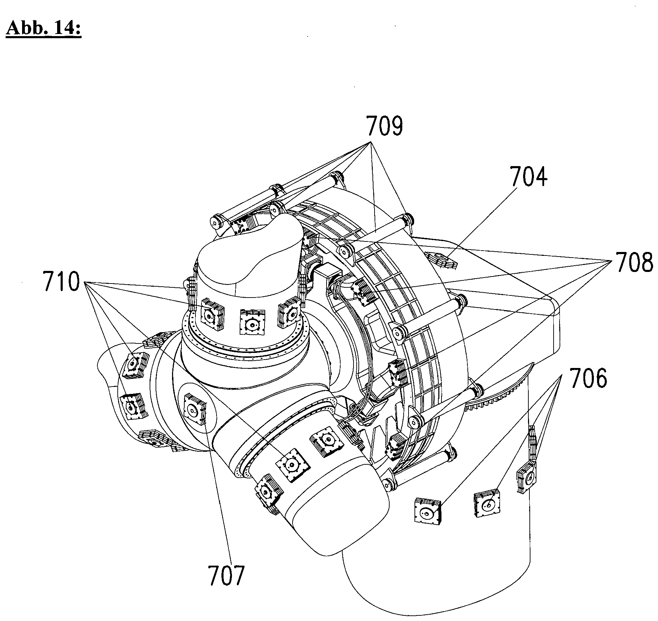

Abb. 12 zeigt ebenfalls ein rotationssymmetrisches zylindrische Elastomerbauteil, welches einer konventionellen Elastomerbuchse, die einen mittigen Hydraulikanschluss hat, ähnelt. Im Bereich dieses Anschlusses hat die Gummischicht einen ringförmigem Kompressionsraum (501). Dieser wird dadurch erzeugt, dass das Elastomer (502) im Bereich (501) ringförmig keine Verbindung mit der Außenbuchse (505) hat. Somit entsteht bei Druckbeaufschlagung über den Anschluss (205) in dem Bereich (501) die Ausdehnungsform (504), so dass das an dieser Stelle verdrängende Volumen den Spalt (06) schließt was die radiale Steifigkeit erhöht. Abb. 13 und 14 zeigen die Anwendung der erfindungsgemäßen einstellbaren Schwingungstilger in Windkraftanlagen. In diesen können sie, wie folgt, eingesetzt werden: Moderne Windkraftanlagen sind drehzahlvariabel, so dass es häufig nicht ausreicht, Tilger oder Lager mit einer festen Eigenfrequenz, welche nur Schwingungen einer bestimmten Frequenz beruhigen können, einzusetzen. Bei drehzahlvariablem Betrieb sind auch die Frequenzen variabel. Störende Schwingungen, die mit den Schwingungstilgern bedämpft werden müssen, entstehen hauptsächlich durch die Zahneingriffsfrequenzen von Getrieben und auch durch Rastmomente von Generatoren. Somit ist es sinnvoll die erfindungsgemäßen Tilger und Lager im Bereich der Entstehung der Schwingungen einzusetzen. Die Tilger und Lager werden so eingebaut, dass deren Wirkrichtungen in die Richtung der entstehenden Schwingungen ausgerichtet sind. Beim Getriebe treten hauptsächlich torsionale Anregungen hauptsächlich in Umfangsrichtung auf. Durch Verformungen des Gehäuses unter den durch Zahneingriff verursachten Schwingungen und auch durch Resonanzerscheinungen von Getriebebauteilen treten darüber hinaus Schwingungen in allen Raumachsen auf. Bei Generatoren entstehen aufgrund der Anordnung der Pole sogenannte Rastmomente, welche dem Drehmoment ein schwingendes Drehmoment überlagern. Dadurch entsteht in Umfangsrichtung eine schwingende Anregung des Stators. Aufgrund dieser tangentialen Anregung entstehen auch zwangserregte sekundär Bewegungen und damit Schwingungen des Generators in allen Raumachsen. Insbesondere werden damit neben der Zwangsanregung auch Resonanzfrequenzen, welche der jeweiligen Erregerfrequenz entsprechen, angeregt.

Die adaptiv einstellbare Wirkrichtung der erfindungsgemäßen Tilger bzw. konusförmigen Lager ist radial und axial möglich. Das Verhältnis zwischen axialer und radialer Tilgerfrequenz wird über den Konuswinkel der Elastomerelemente bestimmt, welche vorzugsweise zwischen 30 und 60° liegen. Der in Abb. 9A beschrieben Tilger ist ein Hybrid aus Abb. 4 und Abb. 9. Die in Abb. 10-12 beschriebenen adaptiven Tilger auf Basis von zylindrischen elastischen Doppelbuchsen haben ihre Vorzugs- Wirkrichtung in radialer Richtung.

Während sich die annähernd zylindrische Schicht in Abb. 4 am Innendurchmesser befindet, ist diese bei Abb. 9a außen und leicht konisch. Die äußere Schicht kann zur Vergrößerung des Stellbereiches konisch sein und einen Hohlraum (3) enthalten, kann aber auch wie in Abb. 4 zylindrisch ausgeführt sein und keinen Hohlraum enthalten. Wesentlich ist, dass diese Schicht in einem größeren Durchmesserbereich liegt als dies in Abb. 4 der Fall ist. Damit ist die Steifigkeit dieser Schicht höher und ist damit deutlich steifer als die innere Elastomerschicht (303). Um einen möglichst großen Einstellbereich mit der inneren Schicht (303) zu ermöglichen, muss die äußere Schicht (310) eine wesentlich größere Steifigkeit aufweisen. Bei Abb. 4 ist die innere zylindrische Schicht deshalb länger ausgeführt.

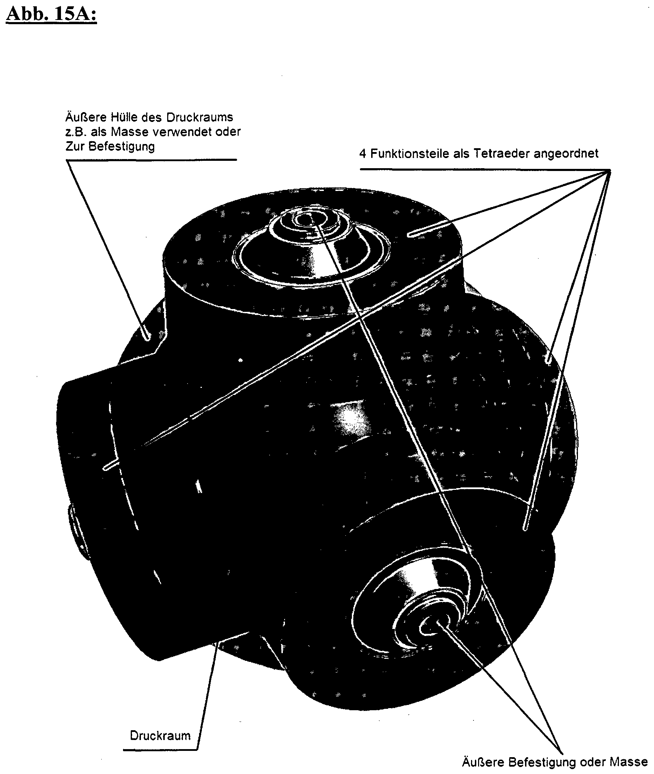

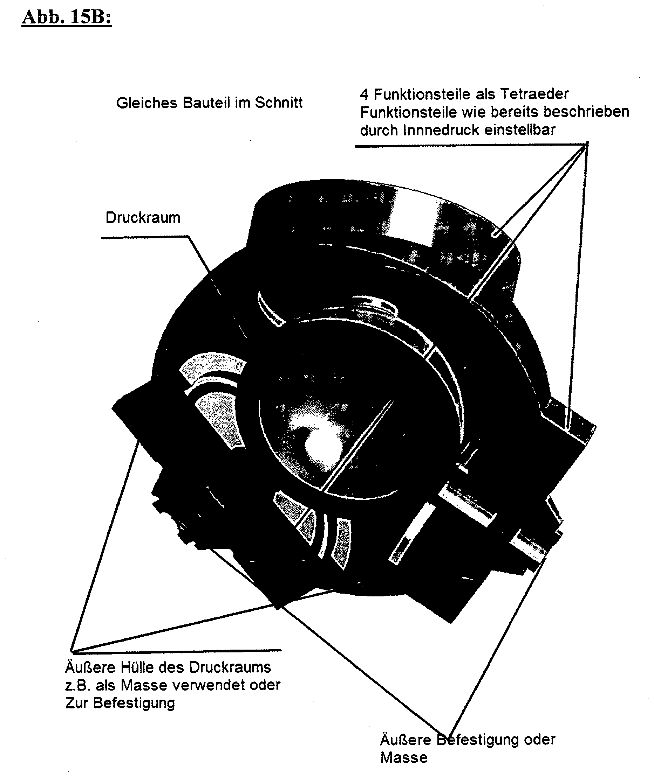

Abb. 15 zeigt beispielhaft eine sternförmige Anordnung eines in alle Raumachsen wirkenden adaptiven Dämpfungssystems, aufgebaut aus den erfindungsgemäßen Doppelkonus- oder Mehrkonuselementen. Die Vielfalt des 3D-Systems kann durch unterschiedliche Steifigkeiten der Einzelelemente gezielt und gesteuert erreicht werden, während das homogene in eine Raumrichtung ausgerichtete System gleiche Steifigkeiten bewirkt.

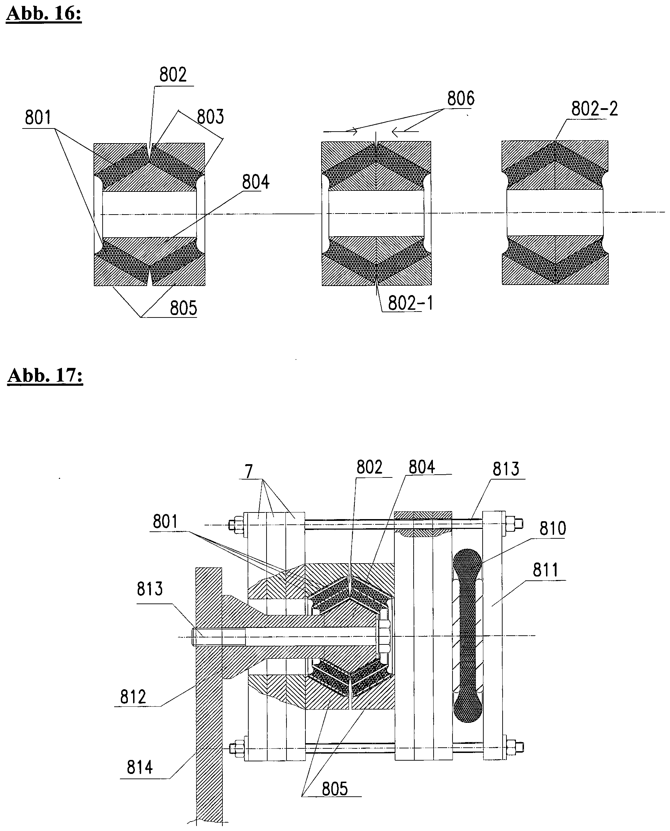

Abb. 16: Eine weitere Möglichkeit zur Vergrößerung der Kraft besteht darin, zwei konische Elastomer Elemente (801) axial mit der Kraft (806) so gegeneinander zu verspannen, dass der dazwischen liegende Spalt (802) geschlossen wird. Abb. 16A zeigt symbolisch das Konuslager mit dem Spalt (802). In Abb. (11B) ist der Spalt teilweise geschlossen. In Abb. 16 C ist der Spalt gänzlich geschlossen. Die Länge (803) des Konuslagers wird damit verdoppelt. Eine Verdoppelung der Längen bringt aufgrund des dadurch entstehenden Verhältnisses freie Fläche zu gebundene Fläche einen sehr starken Anstieg der Federsteifigkeit. Je nach längeren-Schichtdicken Verhältnissen sind beim Zusammentreffen der beiden Elastomerschichten (Abb. 16C) Steifigkeitssteigerungen im Bereich von Faktor 8-20 möglich. Die elastomeren Elemente können nach den bekannten Regeln dimensioniert werden. Es sind auch mehrschichtige Elemente verwendbar. Die Kraft (806) kann mittels Hydraulik Elementen, Pneumatik Elementen, Spindel-Antrieben oder auch magnetisch aufgebracht werden.

Abb. 17 zeigt ein 2-schichtiges Element. In diesem Beispiel wird ein einzelnes Doppelkonuslager mittels Pneumatik über einen Luftbalg vorgespannt.

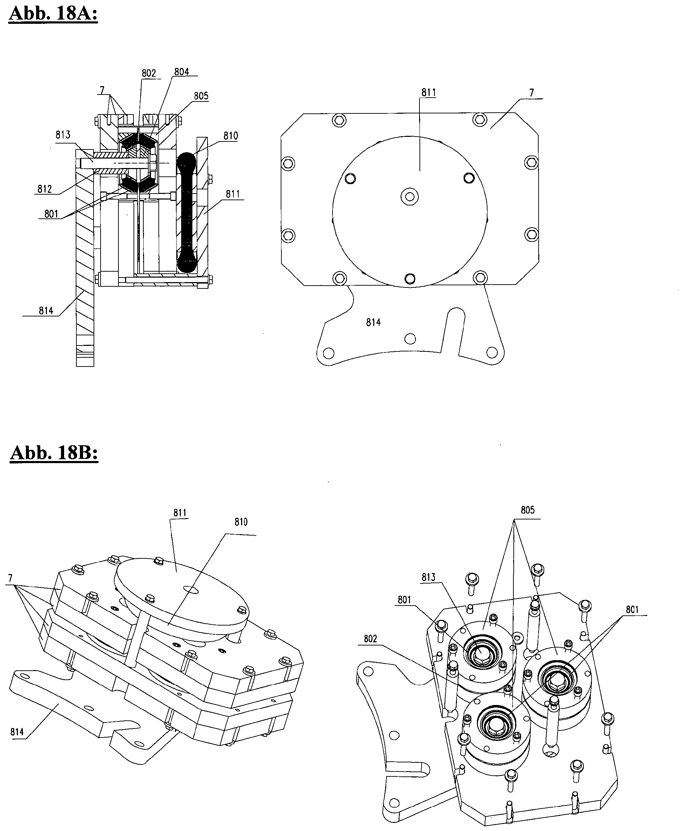

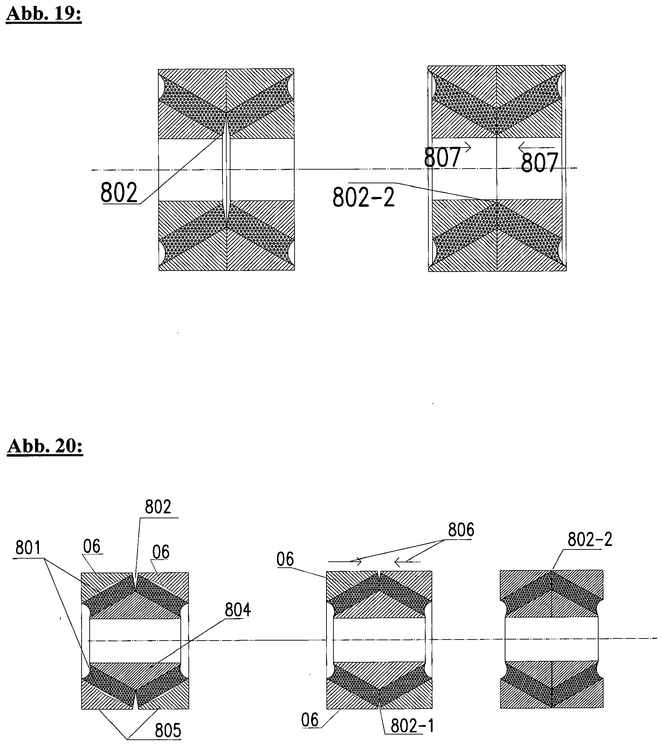

Abb. 18 zeigt beispielhaft ein System, welches aus drei Doppelkonuslagern besteht. Diese werden gemeinsam mit einem Kraft aufbringendem Element, in diesem Fall auch ein Luftbalg vorgespannt. Bei dem oben beschriebenen System werden die äußeren Kegel zusammen gedrückt. Es ist aber auch möglich, die Vorspannung mit den inneren Kegeln durch Einleiten der Kraft (807) wie in Abb.19 gezeichnet, zu erreichen.

Abb. 19 stellt beispielhaft eine weitere, nicht erfindungsgemäße Ausführung dar, in Form einer Kombination der in Abb. 16 bis 19 beschriebenen Funktionen mit der in Abb. 1 bis 3 beschriebenen Funktionen. Die Steifigkeitssteigerungen beider Systeme können somit multipliziert werden. Beim Aufbringen der Kraft (806) werden der Freiraum (06) und der Spalt (802) kontinuierlich geschlossen. Somit überlagern sich beide Steifigkeit verstärkende Methoden. Es sind damit Steifigkeitsfaktoren bei einem vertretbaren Längenverhältnis von ca. 5 möglich, was ein Steifigkeits-Faktor bei alleiniger Betrachtung des Spalt (06) von etwa 18 - 20 ergibt. Wird nun gleichzeitig durch Schließen des Spaltes (802) ein weiterer Steifigkeitsfaktor von ca. 10 erreicht, so steigt der gesamte Steifigkeitsfaktor auf einen Wert von 180. Somit ist mit dieser Methode eine Frequenzverschiebung um Faktor deutlich > 10 erreichbar.

Abb. 20 zeigt ein erfindungsgemäßes Lager-/Tilgersystem, bei dem der Druck als Funktion der Anregungsfrequenz geregelt werden kann. Um die Toleranz, Temperatur- und Alterungseigenschaften der Elastomere auszugleichen, wird die Eigenfrequenz des Tilgers bzw. Lagers und damit der aufzubringende Druck in Abhängigkeit von der zu tilgenden Betriebsfrequenz und der Fasenlage des Tilgers zur Betriebsschwingung ständig überwacht und geregelt.

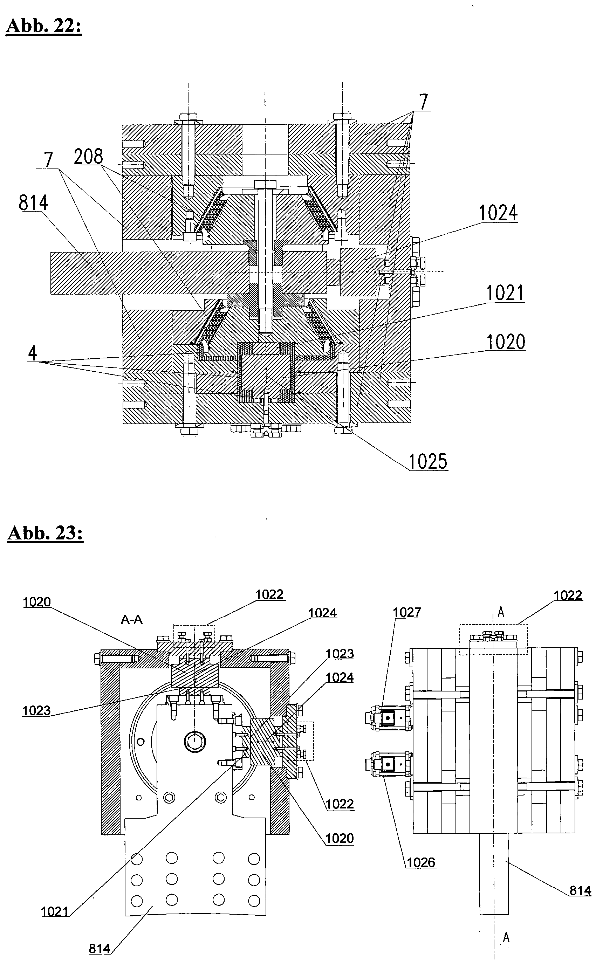

Abb. 21 bis 23 zeigen beispielhaft eine entsprechende Anwendung in einem erfindungsgemäßen Tilger, bzw. in einem Doppelkonuslager. Sie bestehen aus dem Elektromagnet Aktuator (1020) bei dem eine Spule um einen Kern gewickelt ist und aus dem Stator (1021). Zwischen den beiden Bauteilen befindet sich ein Luftspalt (1023) der eine Relativbewegung (1024) und (1025), zwischen (1021) und (1020) zulässt. Diese Teile entsprechen dem Stand der Technik und werden in der Regel zum Antrieb von Schwingförderanlagen eingesetzt. Zur exakten Einstellung des Luftspaltes, der zwischen 0,2 mm bis 1,5 mm (max. 3mm) liegt, kann eine Justier-Vorrichtung (1022) angebracht werden. Ein weiterer Vorteil ist, dass die erfindungsgemäßen Schwingungstilger, die mit solchen Elektro-Zug-Druckmagneten ausgestattet sind, in allen Raumachsen betrieben werden können. Während ein Tauch Spulen-Aktuator keine Querbewegung erfahren darf, hat es bei dem Elektro-Zug-Druck Magneten keine Nachteile, wenn gleichzeitig eine Querbewegung erfolgt. In Abbildung 21 und 23 ist das Zusammenspiel mehrerer Magnete dargestellt. Die Magnete können mit der gleichen Frequenz und der gleichen Phase betrieben werden, können jedoch auch mit unterschiedlicher Frequenz und unterschiedliche Phase in den unterschiedlichen Raumachsen betrieben werden. Insgesamt ist der gleichzeitige Betrieb in allen Raumachsen somit möglich.

Bei dem in Abbildung 21 und Abbildung 22 dargestellten axialen Magnetantrieb wird bei der axialen Bewegung (1025), das in (4) befindliche Druckmedium komprimiert. Für diese axiale Anregung ist es vorteilhaft, wenn das in (4) befindliche Medium kompressibel ist, so dass eine Bewegung möglich ist. Falls eine nicht kompressible Flüssigkeit zur Erreichung der erforderlichen Federkräfte erforderlich ist, muss eine zusätzliche Elastizität vorgesehen werden. Das kann in Form einer Gasblase oder eines sonstigen Federelementes, welches eine federnde Bewegung des Druckmediums (in dem Fall Flüssigkeit) zulässt, ausgeführt werden. Die Anbringung der Magnete erfolgt vorzugsweise in dem nicht Druckbeaufschlagten Raum. Der Magnet (1020), (1021) kann jedoch auch wie in Abb. 22 dargestellt innerhalb des Druckmediums (4)arbeiten.

In Abb. 24 ist ein in zwei Richtungen radial einstellbarer adaptiver Tilger dargestellt: Die bisher beschriebenen Systeme weisen eine Steifigkeit in der radialen Ebene (X-Y), welche senkrecht zur Achse der Lagerelemente angeordnet ist, auf. Eine im Folgenden beschrieben Vorrichtung ermöglicht auch die Einstellung unterschiedlicher Steifigkeiten in der X-Y-Ebene, wobei dies als statische Voreinstellung beispielsweise mittels mindestens einer Stellschraube oder ähnlicher Vorrichtungen, welche zur Kompression der betreffenden Elastomerschichten führt, oder auch adaptiv, beispielsweise mit einer variablen Hydraulik erfolgen. Die statische Voreinstellung geschieht durch Eindrehen der Stellschraube (2002), wodurch dass Verdränger-Volumen (2001) in das bereits beschrieben System gepresst wird, so dass sich der Spalt (06-1) bereits früher schließt und sich somit in der Richtung des verdichteten Funktionsteils eine höhere Steifigkeit ergibt. In Abb. 24 ist der Spalt (06-01) und (03-01) bereits im ursprünglichen Zustand vergrößert, so dass die X-Richtung vor dem Einschrauben der Stellschraube (n) (2002) eine geringere Steifigkeit erhält. Für eine kleinere Steifigkeitsverschiebung ist eine Stellschraube an einer Seite ausreichend. Für größere Steifigkeitsänderungen können wie in Bild 24 dargestellt zwei gegenüberliegende Stellschrauben verwendet werden. Wird die Stellschraube (n) 2002 eingedreht, so vergrößert sich die vorher geringere Steifigkeit in X Richtung , so dass sich beide Steifigkeiten zuerst angleichen. Bei weiterem Eindrehen vergrößert sich die Steifigkeit in X Richtung weiter, so dass diese deutlich größer wird als die Steifigkeit in Y - Richtung. Anstelle der Stellschraube können auch andere technische Mittel mit gleicher Funktion eingesetzt werden. Die beschriebene Ausführungsform dient z.B. als Kalibriereinrichtung um unterschiedliche Steifigkeiten der Anschlusskonstruktion in X- und Y - Richtung auszugleichen. Damit werden Frequenzabweichungen von ca. 10% bis 30% korrigiert. Mit Hilfe dieser Ausführungsform ist auch der adaptive Betrieb des Tilgers in zwei Richtungen möglich. Für den adaptiven Betrieb wird die Einstellschraube durch einen Hydraulik Anschluss ersetzt. Eine Vergrößerung des Druckes hat dann eine Vergrößerung der Steifigkeit zur Folge. Damit kann die bisher in der Ebene beschrieben Adaptivität voneinander unabhängig in zwei Richtungen erfolgen. Der Stellbereich dieser zweiten Adaptivität beträgt etwa 50% bis 80 % des gesamten Stellbereiches des adaptiven Systems. Die beschriebenen Ausführungsform kann bei alle in den Abbildungen 1, 2, 3 , 4, 5, 6, 7, 8, 9, 15, 21, und 22 beschriebenen Tilgern Anwendung finden..

## Patentansprüche

1. Einstellbarer Schwingungstilger geeignet für Windkraftanlagen, im Wesentlichen bestehend aus einer Tilgermasse und mindestens einem Doppel-Konuslager zur Anpassung und Einstellung an in der Anlage auftretenden Erregerfrequenzen, wobei das mindestens eine Doppel-Konuslager zwei Konuslager umfasst, welche mit ihrer breiten Konusbasis und / oder ihrer kurzen Konusbasis gegenüber angeordnet sind, und jedes der beiden Konuslager:
(a) mindestens ein rotationsymmetrisches unelastisches Innen-Konuselement (8)(108(307)(804) und
(b) mindestens ein rotationssymmetrisches unelastisches Außen-Konuselement (9)(202)(805), welches über das Innen-Konuselement gesteckt ist,
umfasst, wobei Innen-Konuselement und Außen-Konuselement durch eine ein- oder mehrschichtige Elastomerschicht (101)(208)(303)(304)(310) miteinander verbunden sind und jeweils mittig in axialer Richtung eine zylindrische Bohrung aufweisen zur Aufnahme von Befestigungs- oder Verspannungsvorrichtungen, und das Innen-Konuselement und/oder das Außen-Konuselement in axialer Richtung durch mechanische, hydraulische, pneumatische oder magnetische Druckmittel oder Vorrichtungen im Konuslager oder außerhalb des Konuslagers aktiv oder passiv verschiebbar ist, **dadurch gekennzeichnet, dass** im Bereich der Elastomerschicht (101)(208)(303) (304)(310) entlang der Grenzfläche zwischen Elastomerschicht und Innen-Konuselement (8)(108(307)(804) oder entlang der Grenzfläche zwischen Elastomerschicht und Außen-Konuselement (9)(202)(805) auf der Seite zum Außen-Konuselement oder auf der Seite zum Innen-Konuselement ein im nicht verspannten Zustand vorhandener entsprechend der besagten Konuselemente geformter rotationssymmetrischer Freiraum (3)(103)(308)(802) vorgesehen ist, welcher
(i) durch bauchige, konkave oder konvexe Gestaltung der Elastomerschicht und / oder des unelastischen inneren oder äußeren Konuselementes in diesem Bereich gebildet wird,
(ii) entlang der besagten Grenzfläche-eine Länge aufweist, die 20 bis 80% der Länge der Konuselemente oder der Länge der Elastomerschicht zwischen den besagten Konuselementen entspricht, und
(iii) entlang der besagten Grenzfläche eine Dicke aufweist, die 5 - 30% der Dicke der Elastomerschicht zwischen den besagten Konuselementen entspricht,
wobei durch die axiale aktive oder passive Verschiebung der besagten unelastischen Konuselemente mittels besagter mechanische, hydraulische, pneumatische oder magnetische Druckmittel oder Vorrichtungen der besagte Freiraum durch Kompression und teilweise Verdrängung der zwischen den konischen Elementen besagten vorhandenen Elastomerschicht in den besagten Freiraum teilweise oder ganz gefüllt wird, wodurch die Steifigkeit des Konuslagers entsprechend der zu dämpfenden Erregerfrequenz variiert und angepasst werden kann.

2. Schwingungstilger nach Anspruch 1, **dadurch gekennzeichnet, dass** die Konuselemente mittig im Bereich der zylindrischen Bohrung eine axial angeordnete zylindrische Innenhülse (13) aufweisen, welche über eine Elastomerschicht (1) mindestens mit der zylindrischen axialen Bohrung des Innen-Konuselementes (8)(108(307)(804) in Verbindung steht.

3. Schwingungstilger nach Anspruch 1 oder 2, **dadurch gekennzeichnet, dass** das Innen-Konuselement (8)(108(307)(804) verschiebbar ist und durch besagte Druckmittel gegen das fixierte Außen-Konuselement (9)(202)(805) gedrückt wird.

4. Schwingungstilger nach Anspruch 1 oder 2, **dadurch gekennzeichnet, dass** das Außen-Konuselement (9)(202)(805) verschiebbar ist und durch besagte Druckmittel gegen das fixierte Innen-Konuselement (8)(108(307)(804) gedrückt wird.

5. Schwingungstilger nach einem der Ansprüche 1 - 4, **dadurch gekennzeichnet, dass** die konusförmige Elastomerschicht (101)(208)(303)(304)(310) an einer oder mehreren Stellen einen direkten Zugang (2002) für mechanische, pneumatische oder hydraulische Mittel sowie ein zusätzliches elastomeres Volumen (2001) besitzt, wobei der Zugang so platziert ist, dass in radialer x,y-Richtung eine adaptierbare variable Steifigkeit in x,y-Richtung erzielt wird.

6. Schwingungstilger nach einem der Ansprüche 1 - 5, **dadurch gekennzeichnet, dass** zwischen Innen-Konuselement und Außen-Konuselement weitere Konuselemente vorhanden sind, welche alle untereinander durch Elastomerschichten ganz oder teilweise verbunden sind, so dass ein Mehrfach-Konuslager gebildet wird.

7. Schwingungstilger nach Anspruch 6, **dadurch gekennzeichnet, dass** besagte weitere Konuselemente und / oder besagte weitere Elastomerschichten zusätzliche Freiräume aufweisen, in den elastisches Material hineingepresst werden kann.

8. Schwingungstilger nach einem der Ansprüche 1 - 7, **dadurch gekennzeichnet dass** der Konuswinkel α eines Konuselementes kleiner ist als der Konuswinkel eines anderen Konuselementes, so dass durch die unterschiedlichen Kegelwinkel radiale und axiale Schwingungen unterschiedlich beeinflusst werden können.

9. Schwingungstilger nach einem der Ansprüche 1 - 8, **dadurch gekennzeichnet, dass** die axiale Verschiebung der Konuselemente aktiv durch ein oder mehrere Flachmagnete erfolgt.

10. Schwingungstilger nach einem der Ansprüche 1 - 9, **dadurch gekennzeichnet, dass** Sensoren sowie gegebenenfalls elektronische computergesteuerte Einrichtungen vorhanden sind, welche eine Veränderung der Erregersequenz messen und aus der gemessenen Veränderung der Erregerfrequenz eine automatische Anpassung der Steifigkeit durch axiale Verschiebung der entsprechenden Konuselemente bewirken.

11. Schwingungstilger nach einem der Ansprüche 1 - 10, **dadurch gekennzeichnet, dass** die Innen-Konuselemente (8)(108(307)(804) über eine Elastomerschicht (1) mit einer axialen zylindrischen Hülse(13) um die mittige axiale Bohrung verbunden sind, und zwischen den beiden Konuslagern, die das Doppelkonuslager bilden, eine Druckkammer (4)(305) sich befindet, welche mit Druck beaufschlagt werden kann, so dass die jeweiligen frei beweglichen Innen-Konuselemente axial auseinander gedrückt werden können und somit Elastomermaterial (101)(208)(303) (304)(310) in die besagten Freiräume (3)(103)(308)(802) der Lager gepresst wird.

12. Windkraftanlage, **dadurch gekennzeichnet, dass** sie einen Schwingungstilger gemäß einem der Ansprüche 1 - 11 aufweist, welcher im Bereich der Rotornabe, der Rotorblätter, des Getriebestranges oder des Turmes angeordnet ist.

13. Windkraftanlage nach Anspruch 12, **dadurch gekennzeichnet**, das 4 - 48 Schwingungstilger symmetrisch verteilt im Bereich der Rotornabe angeordnet sind zur Reduzierung von Vibrationen durch Drehzahländerungen von Rotor und / oder Getriebe.

## Claims

1. Adjustable vibration absorber which is suitable for wind turbines, essentially consisting of an absorber weight and at least one double-cone bearing for adaptation and adjustment to excitation frequencies occurring in the turbine, where the at least one double-cone bearing comprises two cone bearings which are arranged with their broad cone base and/or their short cone base opposite one another, and each of the two cone bearings comprises:
(a) at least one rotationally symmetrical non-elastic inner cone element (8)(108)(307)(804) and
(b) at least one rotationally symmetrical non-elastic outer cone element (9)(202)(805), which has been pushed over the inner cone element,
where inner cone element and outer cone element are connected to one another by a single- or multilayered elastomer layer (101)(208)(303)(304)(310) and each have a cylindrical hole centrally in the axial direction for accommodation of attachment or tensioning devices, and the inner cone element and/or the outer cone element can be displaced actively or passively in the axial direction by mechanical, hydraulic, pneumatic or magnetic pressure means or devices in the cone bearing or outside the cone bearing, **characterised in that** a rotationally symmetrical free space (3)(103)(308)(802), which is present in the untensioned state and is shaped corresponding to the said cone elements, is provided in the region of the elastomer layer (101)(208)(303)(304)(310) along the interface between elastomer layer and inner cone element (8)(108)(307)(804) or along the interface between elastomer layer and outer cone element (9)(202)(805) on the side facing the outer cone element or on the side facing the inner cone element and which
(i) is formed by bulging, concave or convex shaping of the elastomer layer and/or of the non-elastic inner or outer cone element in this region,
(ii) has a length along the said interface which corresponds to 20 to 80% of the length of the cone elements or the length of the elastomer layer between the said cone elements, and
(iii) has a thickness along the said interface which corresponds to 5 - 30% of the thickness of the elastomer layer between the said cone elements,
where the said free space is partly or completely filled by the axial active or passive displacement of the said non-elastic cone elements by means of said mechanical, hydraulic, pneumatic or magnetic pressure means or devices by compression and partial displacement of the said elastomer layer present between the conical elements into the said free space, enabling the stiffness of the cone bearing to be varied and adapted in accordance with the excitation frequency to be damped.

2. Vibration absorber according to Claim 1, **characterised in that** the cone elements have, centrally in the region of the cylindrical hole, an axially arranged cylindrical inner sleeve (13), which is connected at least to the cylindrical axial hole of the inner cone element (8)(108)(307)(804) via an elastomer layer (1).

3. Vibration absorber according to Claim 1 or 2, **characterised in that** the inner cone element (8)(108)(307)(804) is displaceable and is pressed against the fixed outer cone element (9)(202)(805) by said pressure means.

4. Vibration absorber according to Claim 1 or 2, **characterised in that** the outer cone element (9)(202)(805) is displaceable and is pressed against the fixed inner cone element (8)(108)(307)(804) by said pressure means.

5. Vibration absorber according to one of Claims 1 - 4, **characterised in that** the conical elastomer layer (101)(208)(303)(304)(310) has a direct entry (2002) for mechanical, pneumatic or hydraulic means and an additional elastomeric volume (2001) at one or more points, where the entry is positioned in such a way that an adaptable variable stiffness in the x,y direction is achieved in the radial x,y direction.

6. Vibration absorber according to one of Claims 1 - 5, **characterised in that** further cone elements, which are all fully or partly connected to one another by elastomer layers, so that a multiple cone bearing is formed, are present between inner cone element and outer cone element.

7. Vibration absorber according to Claim 6, **characterised in that** said further cone elements and/or said further elastomer layers have additional free spaces into which elastic material can be forced

8. Vibration absorber according to one of Claims 1 - 7, **characterised in that** the cone angle α of one cone element is smaller than the cone angle of another cone element, so that radial and axial vibrations can be influenced differently by the different cone angles.

9. Vibration absorber according to one of Claims 1 - 8, **characterised in that** the axial displacement of the cone elements takes place actively by means of one or more flat magnets.

10. Vibration absorber according to one of Claims 1 - 9, **characterised in that** sensors and optionally electronic computer-controlled devices are present which measure a change in the excitation frequency and effect automatic adaptation of the stiffness from the measured change in the excitation frequency by axial displacement of the corresponding cone elements.

11. Vibration absorber according to one of Claims 1 - 10, **characterised in that** the inner cone elements (8)(108)(307)(804) are connected to an axial cylindrical sleeve (13) around the central axial hole via an elastomer layer (1), and a pressure chamber (4)(305), which can be pressurised so that the respective freely movable inner cone elements can be forced apart axially and elastomer material (101)(208)(303)(304)(310) is forced into the said free spaces (3)(103)(308)(802) of the bearings, is located between the two cone bearings which form the double-cone bearing.

12. Wind turbine, **characterised in that** it has a vibration absorber according to one of Claims 1 - 11, which is arranged in the region of the rotor hub, the rotor blades, the gear train or the tower.

13. Wind turbine according to Claim 12, **characterised in that** 4 - 48 vibration absorbers are arranged symmetrically distributed in the region of the rotor hub for reducing vibrations by changes in the speed of rotation of rotor and/or gearbox.

## Revendications

1. Absorbeur de vibrations réglable qui est approprié pour les éoliennes, constitué de façon essentielle par un poids amortisseur et par au moins un palier de cône double pour une adaptation et un réglage par rapport à des fréquences d'excitation survenant dans la turbine, dans lequel l'au moins un palier de cône double comprend deux paliers de cône qui sont agencés de telle sorte que leurs bases de cône larges et/ou leurs bases de cône courtes soient opposées les unes aux autres ou l'une à l'autre, et chacun des deux paliers de cône comprend :
(a) au moins un élément de cône interne non élastique symétrique en rotation (8)(108)(307)(804) ; et
(b) au moins un élément de cône externe non élastique symétrique en rotation (9)(202)(805), lequel a été poussé au-dessus de l'élément de cône interne ; dans lequel :
l'élément de cône interne et l'élément de cône externe sont connectés l'un à l'autre au moyen d'une couche en élastomère monocouche ou multicouche (101)(208)(303)(304)(310) et chacun d'eux comporte un trou cylindrique centralement dans la direction axiale pour le logement de dispositifs de fixation ou de mise sous tension, et l'élément de cône interne et/ou l'élément de cône externe peuvent/peut être déplacé(s) de façon active ou de façon passive dans la direction axiale par des moyens ou dispositifs de pression mécaniques, hydrauliques, pneumatiques ou magnétiques dans le palier de cône ou à l'extérieur du palier de cône ;
**caractérisé en ce que** : un espace libre symétrique en rotation (3)(103)(308)(802), qui est présent dans l'état de non mise sous tension et qui est conformé de sorte que sa forme corresponde à celles desdits éléments de cône, est ménagé dans la région de la couche en élastomère (101)(208)(303)(304)(310) le long de l'interface entre la couche en élastomère et l'élément de cône interne (8)(108)(307)(804) ou le long de l'interface entre la couche en élastomère et l'élément de cône externe (9)(202)(805) sur le côté qui fait face à l'élément de cône externe ou sur le côté qui fait face à l'élément de cône interne et lequel :
(i) est formé par bombement, mise en forme concave ou convexe de la couche en élastomère et/ou de l'élément de cône interne ou externe non élastique dans cette région ;
(ii) présente une longueur suivant ladite interface qui correspond à 20 à 80% de la longueur des éléments de cône ou de la longueur de la couche en élastomère entre lesdits éléments de cône ; et :
(iii) présente une épaisseur suivant ladite interface qui correspond à 5 - 30% de l'épaisseur de la couche en élastomère entre lesdits éléments de cône ;
dans lequel ledit espace libre est partiellement ou complètement rempli par le déplacement axial actif ou passif desdits éléments de cône non élastiques au moyen desdits moyens ou dispositifs de pression mécaniques, hydrauliques, pneumatiques ou magnétiques par compression et déplacement partiel de ladite couche en élastomère qui est présente entre les éléments coniques à l'intérieur dudit espace libre, ce qui permet de faire varier la raideur du palier de cône et de l'adapter en fonction de la fréquence d'excitation qui doit être amortie.

2. Absorbeur de vibrations selon la revendication 1, **caractérisé en ce que** les éléments de cône comportent, de façon centrale dans la région du trou cylindrique, une gaine interne cylindrique agencée axialement (13), laquelle est connectée au moins au trou axial cylindrique de l'élément de cône interne (8)(108)(307)(804) via une couche en élastomère (1).

3. Absorbeur de vibrations selon la revendication 1 ou 2, **caractérisé en ce que** l'élément de cône interne (8)(108)(307)(804) peut être déplacé et il est pressé contre l'élément de cône externe fixe (9)(202)(805) par lesdits moyens de pression.

4. Absorbeur de vibrations selon la revendication 1 ou 2, **caractérisé en ce que** l'élément de cône externe (9)(202)(805) peut être déplacé et il est pressé contre l'élément de cône interne fixe (8)(108)(307)(804) par lesdits moyens de pression.

5. Absorbeur de vibrations selon l'une des revendications 1 - 4, **caractérisé en ce que** la couche en élastomère conique (101)(208)(303)(304)(310) comporte une entrée directe (2002) pour des moyens mécaniques, pneumatiques ou hydrauliques et un volume élastomérique additionnel (2001) au niveau d'un ou de plusieurs point(s), dans lequel l'entrée est positionnée de telle sorte qu'une raideur variable adaptable suivant la direction x, y soit obtenue suivant la direction x, y radiale.

6. Absorbeur de vibrations selon l'une des revendications 1 - 5, **caractérisé en ce que** d'autres éléments de cône, qui sont tous complètement ou partiellement connectés les uns aux autres par des couches en élastomère, de telle sorte qu'un palier de multiples cônes soit formé, sont présents entre l'élément de cône interne et l'élément de cône externe.

7. Absorbeur de vibrations selon la revendication 6, **caractérisé en ce que** lesdits autres éléments de cône et/ou lesdites autres couches en élastomère comportent des espaces libres additionnels à l'intérieur desquels un matériau élastique peut être forcé.

8. Absorbeur de vibrations selon l'une des revendications 1 - 7, **caractérisé en ce que** l'angle de cône α d'un élément de cône est plus petit que l'angle de cône d'un autre élément de cône, de telle sorte que des vibrations radiales et axiales puissent être influencées de façon différente par les différents angles de cône.

9. Absorbeur de vibrations selon l'une des revendications 1 - 8, **caractérisé en ce que** le déplacement axial des éléments de cône est réalisé de façon active au moyen d'un ou de plusieurs aimant(s) plat(s).

10. Absorbeur de vibrations selon l'une des revendications 1 - 9, **caractérisé en ce que** des capteurs et en option, des dispositifs électroniques commandés par informatique, sont présents, lesquels mesurent une variation de la fréquence d'excitation et réalisent une adaptation automatique de la raideur en fonction de la variation mesurée de la fréquence d'excitation au moyen d'un déplacement axial des éléments de cône correspondants.

11. Absorbeur de vibrations selon l'une des revendications 1 - 10, **caractérisé en ce que** les éléments de cône internes (8)(108)(307)(804) sont connectés à une gaine cylindrique axiale (13) autour du trou axial central via une couche en élastomère (1), et une chambre de pression (4)(305), qui peut être pressurisée de telle sorte que les éléments de cône internes pouvant être déplacés librement respectifs puissent être forcés et séparés axialement et que le matériau en élastomère (101)(208)(303)(304)(310) soit forcé à l'intérieur desdits espaces libres (3)(103)(308)(802) des paliers, est située entre les deux paliers de cône qui forment le palier de cône double.

12. Eolienne, **caractérisée en ce qu'**elle comporte un absorbeur de vibrations selon l'une des revendications 1 - 11, lequel est agencé dans la région du moyeu de rotor, des pales de rotor, du train d'engrenage ou de la tour.

13. Eolienne selon la revendication 12, **caractérisée en ce que** 4 - 48 absorbeurs de vibrations sont agencés de sorte qu'ils soient distribués de façon symétrique dans la région du moyeu de rotor pour réduire les vibrations qui sont dues à des variations de la vitesse de rotation du rotor et/ou de la boîte de vitesses.
